# EUROPÄISCHE PATENTSCHRIFT

(11) **EP 0 799 260 B1**
(45) Veröffentlichungstag und Bekanntmachung des Hinweises auf die Patenterteilung: **06.05.1999**
(21) Anmeldenummer: 95942143.9
(22) Anmeldetag: 13.12.1995
(51) Int. Cl.: C08G 12/32, C08K 3/00, C08K 5/00, C08G 14/10

(54) **VERFAHREN ZUR HERSTELLUNG GEFÄRBTER MELAMIN-FORMALDEHYD-KONDENSATIONSPRODUKTE**
PROCESS FOR PREPARING DYED MELAMINE-FORMALDEHYDE CONDENSATION PRODUCTS
PROCEDE DE PREPARATION DE PRODUITS DE CONDENSATION DE MELAMINE-FORMALDEHYDE COLORES

(30) Priorität: 23.12.1994 DE 4446386
(43) Veröffentlichungstag der Anmeldung: 08.10.1997
(73) Patentinhaber: BASF AKTIENGESELLSCHAFT, 67056 Ludwigshafen (DE)
(72) Erfinder: GUENTHER, Erhard, D-67454 Hassloch (DE); REUTHER, Wolfgang, D-69118 Heidelberg (DE)
(86) Internationale Anmeldenummer: EP9504928
(87) Internationale Veröffentlichungsnummer: WO9620229

(56) Entgegenhaltungen:
- EP-A- 0 355 760
- EP-A- 0 408 947
- EP-A- 0 469 166
- EP-A- 0 601 402
- EP-A- 0 624 665
- DD-A- 273 864
- US-A- 4 182 701
- US-A- 4 886 882

## Beschreibung

Die vorliegende Erfindung betrifft ein verbessertes Verfahren zur Herstellung gefärbter Melamin-Formaldehyd-Kondensationsprodukte durch Einmischen von Pigmenten oder Farbstoffen in eine Reaktionsmischung, enthaltend Ausgangsverbindungen zur Herstellung der Melamin-Formaldehyd-Kondensationsprodukte.

Ferner betrifft die Erfindung gefärbte Melamin-Formaldehyd-Kondensationsprodukte sowie deren Verwendung zur Herstellung von gefärbten Formkörpern, insbesondere Fasern und Vliese.

Die EP-A 523485 beschreibt Melamin-Formaldehyd-Kondensationsprodukte, wobei man bei der Herstellung dieser Produkte Zusatzstoffe wie Pigmente oder Farbstoffe in das Reaktionsgemisch geben kann. Nachteilig an dieser unspezifischen Verfahrensweise ist, daß man für manche Anwendungen, insbesondere bei der Faser und Vliesherstellung, inhomogen gefärbte Kondensationsprodukte erhält. Ferner sind nach bisherigen Beobachtungen die zu verspinnenden Lösungen oftmals mit Stippen versetzt, die zu einem Verstopfen der Rohrleitungen und der Düsen führen können.

EP-A 355 760 beschreibt ein Verfahren zur kontinuierlichen Herstellung von Melamin-Formaldehyd-Vorkondensat-Lösungen, wobei man Melamin, Formaldehyd, Pigmente und gegebenenfalls Modifizierungsmittel und/oder Zusatzstoffe in einen kontinuierlich arbeitenden Mischer dosiert, die homogene Mischung in einen ein- und zwei-welligen Extruder leitet, bei erhöhter Temperatur kondensiert, abkühlt und austrägt. Nachteilig bei dieser Verfahrensweise ist, daß die Homogenisierung der Pigmente unbefriedigend ist.

Der Erfindung lag daher die Aufgabe zugrunde, ein verbessertes Verfahren zur Herstellung von gefärbten Melamin-Formaldehyd-Kondensationsprodukten zur Verfügung zu stellen, das die oben genannten Nachteile nicht aufweist.

Demgemäß wurde ein Verfahren zur Herstellung gefärbter Melamin-Formaldehyd-Kondensationsprodukte durch Einmischen von Pigmenten oder Farbstoffen in eine Reaktionsmischung, enthaltend Ausgangsverbindungen zur Herstellung der Melamin-Formaldehyd-Kondensationsprodukte gefunden, indem man
(A) eine Mischung, enthaltend im wesentlichen
   (a) ein substituiertes Melamin der Formel I 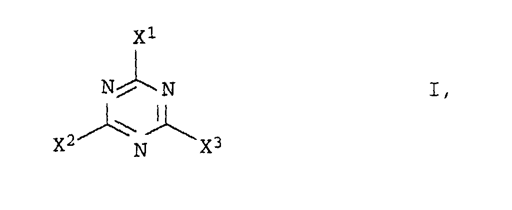 in der X¹, X² und X³ ausgewählt sind aus der Gruppe bestehend aus -NH₂, -NHR¹ und NR¹R², und X¹, X² und X³ nicht gleichzeitig -NH₂ sind, und R¹ und R² ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I, und
   (b) gewünschtenfalls Formaldehyd oder Formaldehyd-liefernden Verbindungen, wobei man das Molverhältnis von Formaldehyd zu Melaminen I im Bereich von 40:1 bis 0 wählt,
   (c) ein Pigment oder einen Farbstoff und
   (d) gewünschtenfalls ein unsubstituiertes Phenol oder mit Resten, ausgewählt aus der Gruppe, bestehend aus C₁-C₉-Alkyl und Hydroxy, substituierte Phenole, mit zwei oder drei Phenolgruppen substituierte C₁-C₄-Alkane, Di(hydroxyphenyl)sulfone oder Mischungen dieser Phenole,
   wobei man das Pigment oder den Farbstoff in einer Menge im Bereich von 0,01 bis 30 Gew.-%, bezogen auf (a) und (b), und man das Phenol in einer Menge im Bereich von 0 bis 5 Mol-%, bezogen auf (a) und (b), zugibt,
   durch intensives Rühren solange dispergiert, bis keine Pigmentagglomerate ≥ 1 µm mehr vorhanden sind,
   und anschließend
(B) die in (A) hergestellte Mischung mit Melamin und gewünschtenfalls mit weiterem Phenol, substituiertem Melamin I und Formaldehyd oder Formaldehyd-liefernden Verbindungen versetzt, wobei man die Mengen so wählt, daß das Molverhältnis von Melaminen (Melamin und (a)) zu (b) im Bereich von 1:1,15 bis 1:4,5 liegt, daß das Pigment oder der Farbstoff in einer Menge im Bereich von 0,01 bis 5 Gew.-%, bezogen auf Melamin und (a) und (b), und daß das Phenol in einer Menge im Bereich von 0 bis 5 Mol-%, bezogen auf Melamin und (a) und (b) vorliegen, und anschließend in an sich bekannter Weise kondensiert.

Außerdem wurden gefärbte Melamin-Formaldehyd-Kondensationsprodukte sowie deren Verwendung zur Herstellung von gefärbten Formkörpern, insbesondere Fasern und Vliese, gefunden.

In der ersten Stufe (A) des erfindungsgemäßen Verfahrens setzt man eine Mischung, bestehend im wesentlichen aus
(a) einem substituierten Melamin der Formel I 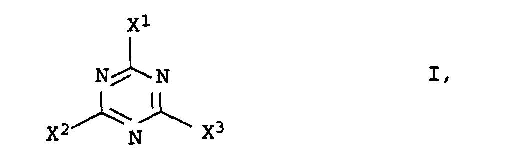 in der X¹, X² und X³ ausgewählt sind aus der Gruppe bestehend aus -NH₂, -NHR¹ und NR¹R², und X¹, X² und X³ nicht gleichzeitig -NH₂ sind, und R¹ und R² ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I, und
(b) gewünschtenfalls Formaldehyd oder Formaldehyd-liefernden Verbindungen, wobei man das Molverhältnis von Formaldehyd zu Melaminen I im Bereich von 40:1 bis 0, vorzugsweise von 25:1 bis 0, wählt,
(c) einem Pigment oder einem Farbstoff und
(d) gewünschtenfalls einem unsubstituierten Phenol oder mit Resten, ausgewählt aus der Gruppe, bestehend aus C₁-C₉-Alkyl und Hydroxy, substituierten Phenolen, mit zwei oder drei Phenolgruppen substituierten C₁-C₄-Alkanen, Di(hydroxyphenyl)sulfone oder Mischungen dieser Phenole, wobei man das Pigment oder den Farbstoff in einer Menge im Bereich von 0,01 bis 30, vorzugsweise von 0,5 bis 15 Gew.-%, bezogen auf (a) und (b), und man das Phenol in einer Menge im Bereich von 0 bis 5, vorzugsweise von 0,2 bis 2 Mol-%, bezogen auf (a) und (b), zugibt, ein, und dispergiert diese Mischung solange durch intensives Rühren, bis keine Pigmentagglomerate ≥ 1 µm mehr vorhanden sind.

Als substituierte Melamine der allgemeinen Formel I 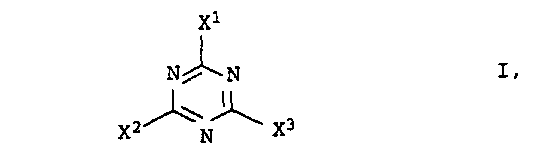 kommen solche in Betracht, in denen X¹, X² und X³ ausgewählt sind aus der Gruppe bestehend aus -NH₂, -NHR¹ und -NR¹R², wobei X¹, X² und X³ nicht gleichzeitig -NH₂ sind, und R¹ und R² ausgewählt sind aus der Gruppe bestehend aus Hydroxy-C₂-C₁₀-alkyl, Hydroxy-C₂-C₄-alkyl-(oxa-C₂-C₄-alkyl)n, mit n = 1 bis 5, und Amino-C₂-C₁₂-alkyl.

Als Hydroxy-C₂-C₁₀-alkyl-Gruppen wählt man bevorzugt Hydroxy-C₂-C₆-alkyl wie 2-Hydroxyethyl, 3-Hydroxy-n-propyl, 2-Hydroxyisopropyl, 4-Hydroxy-n-butyl, 5-Hydroxy-n-pentyl, 6-Hydroxy-n-hexyl, 3-Hydroxy-2,2-dimethylpropyl, bevorzugt Hydroxy-C₂-C₄-alkyl wie 2-Hydroxyethyl, 3-Hydroxy-n-propyl, 2-Hydroxyisopropyl und 4-Hydroxy-n-butyl, besonders bevorzugt 2-Hydroxyethyl und 2-Hydroxyisopropyl.

Als Hydroxy-C₂-C₄-alkyl-(oxa-C₂-C₄-alkyl)ₙ-Gruppen wählt man bevorzugt solche mit n = 1 bis 4, besonders bevorzugt solche mit n = 1 oder 2 wie 5-Hydroxy-3-oxa-pentyl, 5-Hydroxy-3-oxa-2,5-dimethyl-pentyl, 5-Hydroxy-3-oxa-1,4-dimethyl-pentyl, 5-Hydroxy-3-oxa-1,2,4,5-tetramethyl-pentyl, 8-Hydroxy-3,6-dioxaoctyl.

Als Amino-C₂-C₁₂-alkyl-Gruppen kommen bevorzugt Amino-C₂-C₈-alkyl-Gruppen wie 2-Aminoethyl, 3-Aminopropyl, 4-Aminobutyl, 5-Aminopentyl, 6-Aminohexyl, 7-Aminoheptyl sowie 8-Aminooctyl, besonders bevorzugt 2-Aminoethyl und 6-Aminohexyl, ganz besonders bevorzugt 6-Aminohexyl, in Betracht.

Für die Erfindung besonders geeignete substituierte Melamine sind folgende Verbindungen: mit der 2-Hydroxyethylamino-Gruppe substituierte Melamine wie 2-(2-Hydroxyethylamino)-4,6-diamino-1,3,5-triazin, 2,4-Di-(2-hydroxyethylamino)-6-amino-1,3,5-triazin, 2,4,6-Tris-(2-hydroxyethylamino)-1,3,5-triazin, mit der 2-Hydroxyisopropylamino-Gruppe substituierte Melamine wie 2-(2-Hydroxyisopropylamino)-4,6-diamino-1,3,5-triazin, 2,4-Di-(2-hydroxyisopropylamino)-6-amino-1,3,5-triazin, 2,4,6-Tris-(2-hydroxyisopropylamino)-1,3,5-triazin, mit der 5-Hydroxy-3-oxa-pentylamino-Gruppe substituierte Melamine wie 2-(5-Hydroxy-3-oxa-pentylamino)-4,6-diamino-1,3,5-triazin, 2,4-Di-(5-hydroxy-3-oxa-pentylamino)-6-amino-1,3,5-triazin, 2,4,6-Tris-(5-hydroxy-3-oxa-pentylamino)-1,3,5-triazin, mit der 6-Aminohexylamino-Gruppe substituierte Melamine wie 2-(6-Aminohexylamino)-4,6-diamino-1,3,5-triazin, 2,4-Di-(6-aminohexylamino)-6-amino-1,3,5-triazin, 2,4,6-Tris-(6-aminohexylamino)-1,3,5-triazin oder Gemische dieser Verbindungen, beispielsweise ein Gemisch aus 10 mol-% 2-(5-Hydroxy-3-oxa-pentylamino)-4,6-diamino-1,3,5-triazin, 50 mol-% 2,4-Di-(5-hydroxy-3-oxy-pentylamino)-6-amino-1,3,5-triazin und 40 mol-% 2,4,6-Tris-(5-hydroxy-3-oxa-pentylamino)-1,3,5-triazin.

Formaldehyd setzt man in der Regel als wäßrige Lösung mit einer Konzentration von zum Beispiel 40 bis 50 Gew.-% oder in Form von Formaldehyd liefernden Verbindungen, beispielsweise als oligomeren oder polymeren Formaldehyd in fester Form wie Paraformaldehyd, 1,3,5-Trioxan oder 1,3,5,7-Tetroxocan, ein.

Als Phenole eignen sich ein oder zwei Hydroxygruppen enthaltende Phenole wie unsubstituierte oder mit Resten, ausgewählt aus der Gruppe aus C₁-C₉-Alkyl und Hydroxy, substituierte Phenole sowie mit zwei oder drei Phenolgruppen substituierte C₁-C₄-Alkane, Di(hydroxyphenyl)sulfone oder Mischungen dieser Phenole.

Als bevorzugte Phenole kommen in Betracht Phenol, 4-Methylphenol, 4-tert.-Butyl-phenol, 4-n-Octyl-phenol, 4-n-Nonyl-phenol, Brenzcatechin, Resorcin, Hydrochinon, 2,2-Bis(4-hydroxyphenyl)-propan, 4,4'-Dihydroxydiphenylsulfon, besonders bevorzugt Phenol, Resorcin und 2,2-Bis(4-hydroxyphenyl)propan.

Die im erfindungsgemäßen Verfahren zur Anwendung gelangenden Farbstoffe stammen bevorzugt aus der Klasse der Azo-, Anthrachinon-, Cumarin-, Methin- oder Azamethin-, Chinophthalon- oder Nitrofarbstoffe. Sie sind entweder frei von ionischen Gruppen oder tragen Carboxyl- und/oder Sulfonsäuregruppen.

Geeignete Farbstoffe, die frei sind von ionischen Gruppen, werden im folgenden näher beschrieben.

Geeignete Azofarbstoffe sind insbesondere Mono- oder Disazofarbstoffe, z.B. solche mit einer Diazokomponente, die sich von einem Anilin oder von einem fünfgliedrigen aromatischen heterocyclischen Amin ableitet, das ein bis drei Heteroatome, ausgewählt aus der Gruppe, bestehend aus Stickstoff, Sauerstoff und Schwefel, im heterocyclischen Ring aufweist und durch einen Benzol-, Thiophen-, Pyridin- oder Pyrimidinring anelliert sein kann.

Wichtige Mono- oder Disazofarbstoffe sind beispielsweise solche, deren Diazokomponente sich z.B. von einem Anilin oder von einem heterocyclischen Amin aus der Pyrrol-, Furan-, Thiophen-, Pyrazol-, Imidazol-, Oxazol-, Isoxazol-, Thiazol-, Isothiazol-, Triazol-, Oxadiazol-, Thiadiazol-, Benzofuran-, Benzthiophen-, Benzimidazol-, Benzoxazol-, Benzthiazol-, Benzisothiazol-, Pyridothiophen-, Pyrimidothiophen-, Thienothiophen- oder Thienothiazolreihe ableitet.

Besonders zu nennen sind solche Diazokomponenten, die von einem Anilin oder von einem heterocyclischen Amin aus der Pyrrol-, Thiophen-, Pyrazol-, Thiazol-, Isothiazol-, Triazol-, Thiadiazol-, Benzthiophen-, Benzthiazol-, Benzisothiazol-, Pyridothiophen-, Pyrimidothiophen-, Thienothiophen- oder Thienothiazolreihe stammen.

Von Bedeutung sind weiterhin Azofarbstoffe mit einer Kupplungskomponente aus der Anilin-, Aminonaphthalin-, Aminothiazol-, Diaminopyridin- oder Hydroxypyridonreihe.

Von besonderer Bedeutung sind Azofarbstoffe der Formel IIa

D¹-N=N-K¹ (IIa),

in der
- D¹: für einen Rest der Formel 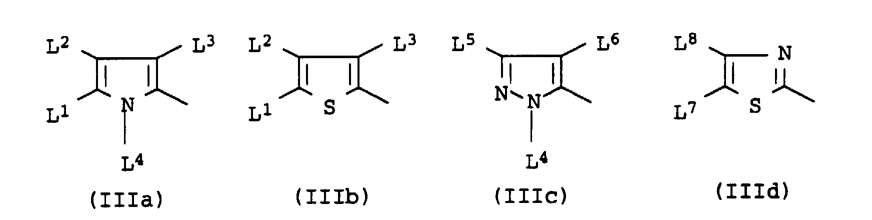 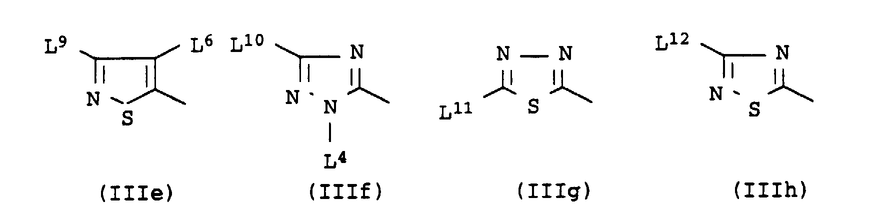 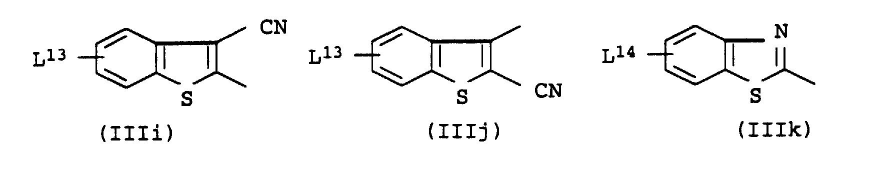 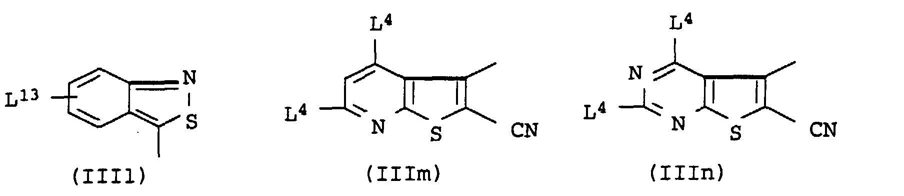 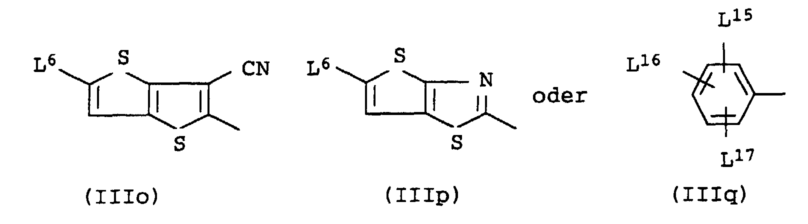 und
- K: für Hydroxyphenyl oder einen Rest der Formel 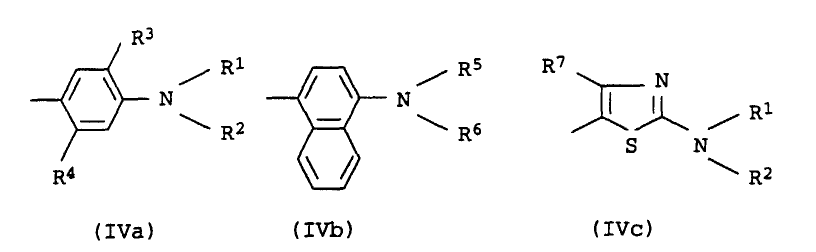 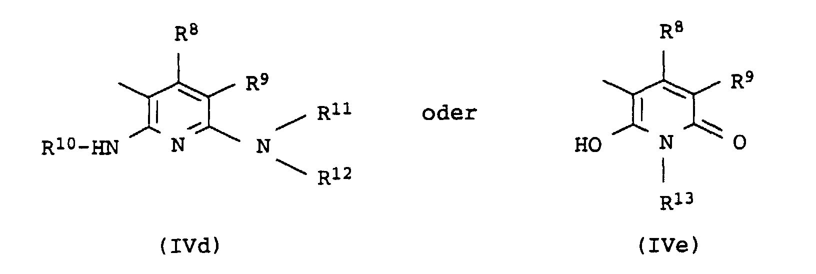
stehen, worin
- L¹: Nitro, Cyano, C₁-C₆-Alkanoyl, Benzoyl, C₁-C₆-Alkylsulfonyl, gegebenenfalls substituiertes Phenylsulfonyl oder einen Rest der Formel -CH=T, worin T die Bedeutung von Hydroxyimino, C₁-C₄-Alkoxyimino oder eines Restes einer CH-aciden Verbindung besitzt,
- L²: Wasserstoff, C₁-C₆-Alkyl, Halogen, Hydroxy, Mercapto, gegebenenfalls durch Phenyl oder C₁-C₄-Alkoxy substituiertes C₁-C₆-Alkoxy, gegebenenfalls substituiertes Phenoxy, gegebenenfalls durch Phenyl substituiertes C₁-C₆-Alkylthio, gegebenenfalls substituiertes Phenylthio, C₁-C₆-Alkylsulfonyl oder gegebenenfalls substituiertes Phenylsulfonyl,
- L³: Cyano, C₁-C₄-Alkoxycarbonyl oder Nitro,
- L⁴: Wasserstoff, C₁-C₆-Alkyl oder Phenyl,
- L⁵: C₁-C₆-Alkyl oder Phenyl,
- L⁶: Wasserstoff, Cyano, C₁-C₄-Alkoxycarbonyl, C₁-C₆-Alkanoyl, Thiocyanato oder Halogen,
- L⁷: Nitro, Cyano, C₁-C₆-Alkanoyl, Benzoyl, C₁-C₄-Alkoxycarbonyl, C₁-C₆-Alkylsulfonyl, gegebenenfalls substituiertes Phenylsulfonyl oder einen Rest der Formel -CH=T, worin T die obengenannte Bedeutung besitzt,
- L⁸: Wasserstoff, C₁-C₆-Alkyl, Cyano, Halogen, gegebenenfalls durch Phenyl oder C₁-C₄-Alkoxy substituiertes C₁-C₆-Alkoxy, gegebenenfalls durch Phenyl substituiertes C₁-C₆-Alkylthio, gegebenenfalls substituiertes Phenylthio, C₁-C₆-Alkylsulfonyl, gegebenenfalls substituiertes Phenylsulfonyl oder C₁-C₄-Alkoxycarbonyl,
- L⁹: Cyano, gegebenenfalls durch Phenyl substituiertes C₁-C₆-Alkyl, gegebenenfalls durch Phenyl substituiertes C₁-C₆-Alkylthio, gegebenenfalls substituiertes Phenyl, Thienyl, C₁-C₄-Alkylthienyl, Pyridyl oder C₁-C₄-Alkylpyridyl,
- L¹⁰: Phenyl oder Pyridyl,
- L¹¹: Trifluormethyl, Nitro, C₁-C₆-Alkyl, Phenyl, gegebenenfalls durch Phenyl substituiertes C₁-C₆-Alkylthio oder C₁-C₆-Dialkylamino,
- L¹²: C₁-C₆-Alkyl, Phenyl, 2-Cyanoethylthio oder 2-(C₁-C₄-Alkoxycarbonyl)ethylthio,
- L¹³: Wasserstoff, Nitro oder Halogen,
- L¹⁴: Wasserstoff, Cyano, C₁-C₄-Alkoxycarbonyl, Nitro oder Halogen,
- L¹⁵, L¹⁶ und L¹⁷: gleich oder verschieden sind und unabhängig voneinander jeweils Wasserstoff, C₁-C₆-Alkyl, C₁-C₆-Alkoxy, Halogen, Nitro, Cyano, gegebenenfalls substituiertes C₁-C₄-Alkoxycarbonyl, C₁-C₆-Alkylsulfonyl, gegebenenfalls substituiertes Phenylsulfonyl oder gegebenenfalls substituiertes Phenylazo,
- R¹ und R²: gleich oder verschieden sind und unabhängig voneinander jeweils Wasserstoff, gegebenenfalls substituiertes C₁-C₆-Alkyl, das durch 1 oder 2 Sauerstoffatome in Etherfunktion unterbrochen sein kann, C₅-C₇-Cycloalkyl oder C₃-C₆-Alkenyl,
- R³: Wasserstoff, C₁-C₆-Alkyl oder C₁-C₆-Alkoxy,
- R⁴: Wasserstoff, C₁-C₆-Alkyl, C₁-C₆-Alkoxy, C₁-C₆-Alkylsulfonylamino, gegebenenfalls substituiertes C₁-C₆-Alkanoylamino oder Benzoylamino,
- R⁵ und R⁶: gleich oder verschieden sind und unabhängig voneinander jeweils Wasserstoff oder C₁-C₆-Alkyl,
- R⁷: Wasserstoff, gegebenenfalls substituiertes Phenyl oder Thienyl,
- R⁸: Wasserstoff oder C₁-C₆-Alkyl,
- R⁹: Cyano, Carbamoyl oder Acetyl,
- R¹⁰, R¹¹ und R¹²: gleich oder verschieden sind und unabhängig voneinander jeweils gegebenenfalls substituiertes C₁-C₁₂-Alkyl, das durch 1 bis 3 Sauerstoffatome in Etherfunktion unterbrochen sein kann, C₅-C₇-Cycloalkyl, gegebenenfalls substituiertes Phenyl, C₃-C₆-Alkenyl, gegebenenfalls substituiertes Benzoyl, C₁-C₈-Alkanoyl, C₁-C₆-Alkylsulfonyl oder gegebenenfalls substituiertes Phenylsulfonyl oder R¹¹ und R¹² zusammen mit dem sie verbindenden Stickstoffatom einen 5- oder 6-gliedrigen gesättigten heterocyclischen Rest, der gegebenenfalls weitere Heteroatome enthält, und
- R¹³: Wasserstoff oder C₁-C₆-Alkyl bedeuten.

Geeignete Anthrachinonfarbstoffe stammen z.B. aus der Klasse der 1-Aminoanthrachinone. Sie gehorchen z.B. der Formel Va, Vb, Vc oder Vd 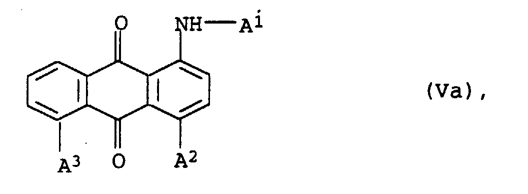 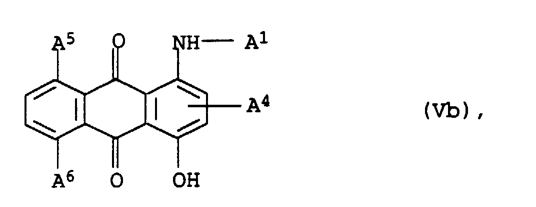 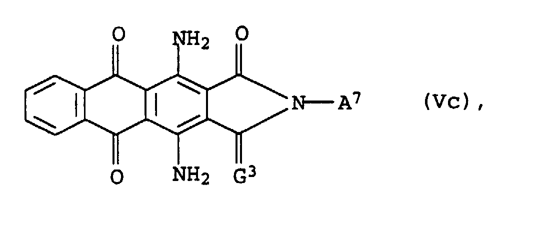 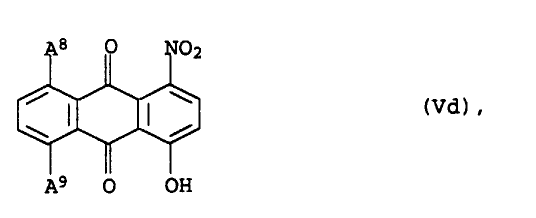 worin
- A¹: Wasserstoff, C₁-C₈-Alkyl oder gegebenenfalls substituiertes Phenyl,
- A²: Hydroxy oder den Rest NH-A¹,
- A³: Wasserstoff oder Nitro,
- A⁴: Halogen, Hydroxyphenyl, C₁-C₄-Alkoxyphenyl oder ein Rest der Formel 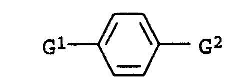 worin G¹ für Sauerstoff oder Schwefel und G² für Wasserstoff oder C₁-C₈-Monoalkylsulfamoyl, dessen Alkylkette durch 1 oder 2 Sauerstoffatome in Etherfunktion unterbrochen sein kann, stehen,
einer der beiden Reste A⁵ und A⁶ Hydroxy und der andere den Rest NH-A¹ oder A⁵ und A⁶ jeweils Wasserstoff,
- A⁷: Wasserstoff oder C₁-C₈-Alkyl, das gegebenenfalls durch 1 bis 3 Sauerstoffatome in Etherfunktion unterbrochen ist,
einer der beiden Reste A⁸ und A⁹ Hydroxy und der andere Anilin und
- G³: Sauerstoff oder Imino bedeuten.

Geeignete Cumarinfarbstoffe stammen z.B. aus der Klasse der 7-Dialkylaminocumarine. Sie gehorchen z.B. der Formel IVa, IVb oder IVc 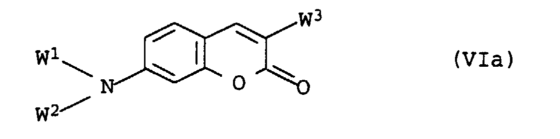 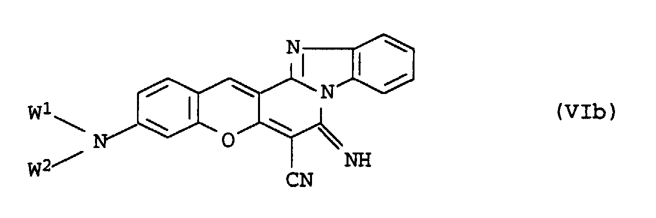 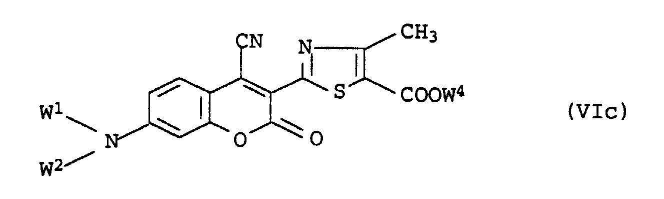 worin
- W¹ und W²: unabhängig voneinander jeweils C₁-C₄-Alkyl,
- W³: Benzimidazol-2-yl, 5-Chlorbenzoxazol-2-yl, Benzthiazol-2-yl, 4-Hydroxychinazolin-2-yl oder 5-Phenyl-1,3,4-thiadiazol-2-yl und
- W⁴: C₁-C₈-Alkyl bedeuten.

Geeignete Methin- oder Azamethinfarbstoffe stammen z.B. aus der Klasse der Triazolopyridine oder Pyridine. Sie gehorchen z.B. der Formel VIIa oder VIIb 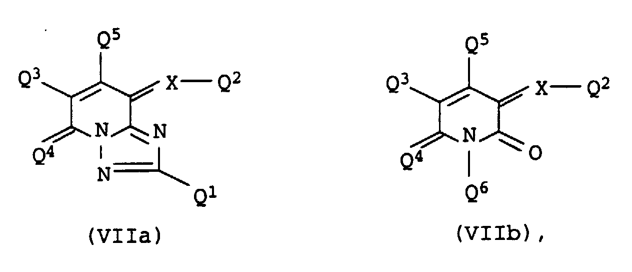 worin
- X: Stickstoff oder CH,
- Q¹: C₁-C₂₀-Alkyl, das gegebenenfalls substituiert ist und durch ein oder mehrere Sauerstoffatome in Etherfunktion unterbrochen sein kann, gegebenenfalls substituiertes Phenyl oder Hydroxy,
- Q²: einen 5-gliedrigen aromatischen heterocyclischen Rest,
- Q³: Wasserstoff, Cyano, Carbamoyl, Carboxyl oder C₁-C₄-Alkoxycarbonyl,
- Q⁴: Sauerstoff oder einen Rest der Formel C(CN)₂, C(CN)COOE¹ oder C(COOE¹)₂, wobei E¹ jeweils für C₁-C₈-Alkyl, das gegebenenfalls durch 1 oder 2 Sauerstoffatome in Etherfunktion unterbrochen ist, steht,
- Q⁵: Wasserstoff oder C₁-C₄-Alkyl,
- Q⁶: C₁-C₂₀-Alkyl, das gegebenenfalls substituiert ist und durch ein oder mehrere Sauerstoffatome in Etherfunktion unterbrochen sein kann, gegebenenfalls substituiertes Phenyl, Hydroxy oder einen Rest der Formel NE²E³, wobei E² und E³ gleich oder verschieden sind und unabhängig voneinander jeweils für Wasserstoff, gegebenenfalls substituiertes C₁-C₁₂-Alkyl, C₅-C₇-Cycloalkyl, gegebenenfalls substituiertes Phenyl, gegebenenfalls substituiertes Pyridyl, gegebenenfalls substituiertes C₁-C₁₂-Alkanoyl, C₁-C₁₂-Alkoxycarbonyl, gegebenenfalls substituiertes C₁-C₁₂-Alkylsulfonyl, C₅-C₇-Cycloalkylsulfonyl, gegebenenfalls substituiertes Phenylsulfonyl, gegebenenfalls substituiertes Pyridylsulfonyl, gegebenenfalls substituiertes Benzoyl, Pyridylcarbonyl oder Thienylcarbonyl oder E² und E³ zusammen mit dem sie verbindenden Stickstoffatom gegebenenfalls durch C₁-C₄-Alkyl substituiertes Succinimido, gegebenenfalls durch C₁-C₄-Alkyl substituiertes Phthalimido oder einen fünf- oder sechsgliedrigen gesättigten heterocyclischen Rest, der gegebenenfalls weitere Heteroatome enthält, stehen, bedeuten.

Die Farbstoffe der Formel VIIa oder VIIb können in mehreren tautomeren Formen auftreten, die alle von den Patentansprüchen umfaßt werden. Beispielsweise können die Verbindungen der Formel VIIa (mit Q⁴ = Sauerstoff und Q⁵ = Methyl) u.a. in folgenden tautomeren Formen auftreten: 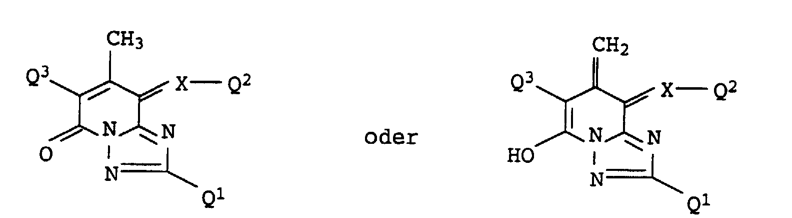 Reste Q² können sich z.B. von Komponenten aus Pyrrol-, Thiazol-, Thiophen- oder Indolreihe ableiten.

Wichtige Reste Q² sind z.B. solche der Formeln VIIIa bis VIIId 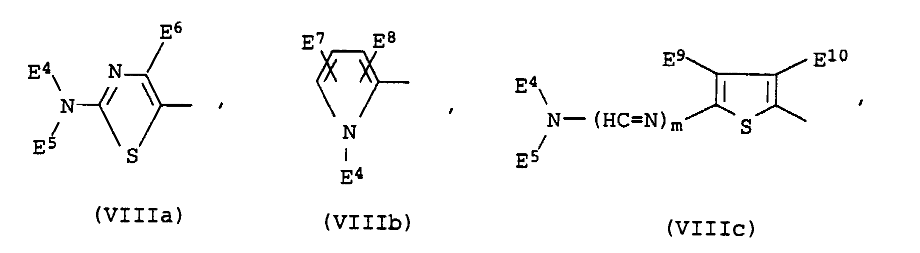 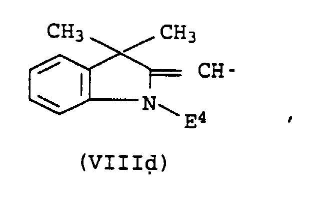 worin
- m: 0 oder 1,
- E⁴ und E⁵: gleich oder verschieden sind und unabhängig voneinander jeweils Wasserstoff oder mit Ausnahme von Hydroxy auch den obengenannten Rest R¹ oder zusammen mit dem sie verbindenden Stickstoffatom einen 5- oder 6-gliedrigen gesättigten heterocyclischen Rest, der gegebenenfalls weitere Heteroatome aufweist,
- E⁶: Wasserstoff, Halogen, C₁-C₈-Alkyl, gegebenenfalls durch C₁-C₄-Alkyl oder C₁-C₄-Alkoxy substituiertes Phenyl, gegebenenfalls durch C₁-C₄-Alkyl oder C₁-C₄-Alkoxy substituiertes Benzyl, Cyclohexyl, Thienyl, Hydroxy oder C₁-C₈-Monoalkylamino,
- E⁷ und E⁸: unabhängig voneinander jeweils Wasserstoff, Hydroxy, gegebenenfalls durch Phenyl oder C₁-C₄-Alkylphenyl substituiertes C₁-C₈-Alkyl, gegebenenfalls durch Phenyl oder C₁-C₄-Alkylphenyl substituiertes C₁-C₈-Alkoxy, C₁-C₈-Alkanoylamino, C₁-C₈-Alkylsulfonylamino oder C₁-C₈-Mono- oder Dialkylaminosulfonylamino,
- E⁹: Cyano, Carbamoyl, C₁-C₈-Mono- oder Dialkylcarbamoyl, C₁-C₈-Alkoxycarbonyl oder gegebenenfalls substituiertes Phenyl und
- E¹⁰: Halogen, Wasserstoff, C₁-C₄-Alkyl, C₁-C₄-Alkoxy, C₁-C₄-Alkylthio, gegebenenfalls durch C₁-C₄-Alkyl oder C₁-C₄-Alkoxy substituiertes Phenyl oder Thienyl bedeuten.

Besonders geeignete Chinophthalonfarbstoffe weisen einen Chinolinring auf der in Ringposition 4 entweder unsubstituiert oder durch Halogen substituiert ist. Sie gehorchen z.B. der Formel IX 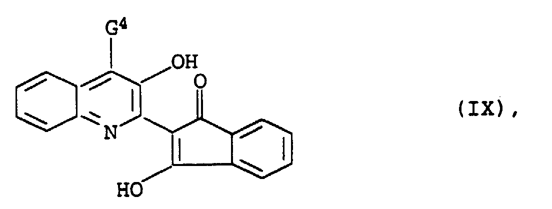 in der G⁴ Wasserstoff, Chlor oder Brom bedeutet.

Ein geeigneter Nitrofarbstoff gehorcht z.B. der Formel X 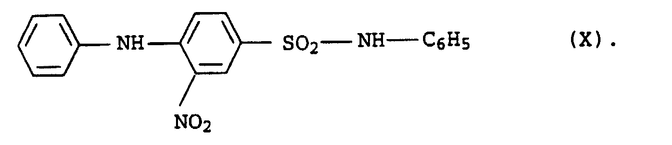 Alle in den obengenannten Formeln auftretenden Alkyl- oder Alkenylgruppen können sowohl geradkettig als auch verzweigt sein.

Wenn in den obengenannten Formeln substituierte Alkylreste auftreten, so können als Substituenten, sofern nicht anders vermerkt, z.B. Cyclohexyl, Phenyl, C₁-C₄-Alkylphenyl, C₁-C₄-Alkoxyphenyl, Halogenphenyl, C₁-C₈-Alkanoyloxy, C₁-C₈-Alkylaminocarbonyloxy, C₁-C₂₀-Alkoxycarbonyl, C₁-C₂₀-Alkoxycarbonyloxy, wobei die Alkylkette der beiden letztgenannten Reste gegebenenfalls durch 1 bis 4 Sauerstoffatome in Etherfunktion unterbrochen und/oder durch Phenyl oder Phenoxy substituiert ist, Cyclohexyloxy, Phenoxy, Halogen, Hydroxy oder Cyano in Betracht kommen. Die Alkylreste weisen dabei in der Regel 1 oder 2 Substituenten auf.

Wenn in den obengenannten Formeln Alkylreste auftreten, die durch Sauerstoffatome in Etherfunktion unterbrochen sind, so sind, sofern nicht anders vermerkt, solche Alkylreste bevorzugt, die durch 1 bis 4 Sauerstoffatome, insbesondere 1 bis 2 Sauerstoffatome, in Etherfunktion unterbrochen sind.

Wenn in den obengenannten Formeln substituierte Phenyl- oder Pyridylreste auftreten, so können als Substituenten, sofern nicht anders vermerkt, z.B. C₁-C₈-Alkyl, C₁-C₈-Alkoxy, Halogen, dabei insbesondere Chlor oder Brom, Nitro oder Carboxyl in Betracht kommen. Die Phenyl- oder Pyridylreste weisen dabei in der Regel 1 bis 3 Substituenten auf.

Es folgen beispielhafte Auf zählungen für die Reste in den Formeln II bis IV.

Reste L², L⁴, L⁵, L⁸, L⁹, L¹¹, L¹², L¹⁵, L¹⁶, L¹⁷, R¹, R², R³, R⁴, R⁵, R⁶, R⁸, R¹⁰, R¹¹, R¹² und R¹³ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste L⁹ sind weiterhin z.B. Benzyl oder 1- oder 2-Phenylethyl.

Reste L², L⁸, L⁹ und L¹¹ sind weiterhin z.B. Methylthio, Ethylthio, Propylthio, Isopropylthio, Butylthio, Isobutylthio, Pentylthio, Hexylthio, Benzylthio oder 1- oder 2-Phenylethylthio.

Reste L² und L⁸ sind weiterhin z.B. Phenylthio, 2-Methylphenylthio, 2-Methoxyphenylthio oder 2-Chlorphenylthio.

Reste L², L⁸, L¹⁵, L¹⁶, L¹⁷, R³ und R⁴ sind weiterhin z.B. Methoxy, Ethoxy, Propoxy, Isopropoxy, Butoxy, Isobutoxy, sec-Butoxy, Pentyloxy, Isopentyloxy, Neopentyloxy, tert-Pentyloxy, Hexyloxy oder 2-Methylpentyloxy.

Reste L⁶ sind, wie weiterhin auch Reste L², L⁸, L¹³, L¹⁴, L¹⁵, L¹⁶ und L¹⁷, z.B. Fluor, Chlor oder Brom.

Reste L⁷ sind, wie weiterhin auch Reste L¹, L², L⁸, L¹⁵, L¹⁶, L¹⁷, R¹⁰, R¹¹ und R¹², z.B. Methylsulfonyl, Ethylsulfonyl, Propylsulfonyl, Isopropylsulfonyl, Butylsulfonyl, Isobutylsulfonyl sec-Butylsulfonyl, Pentylsulfonyl, Isopentylsulfonyl, Neopentylsulfonyl, Hexylsulfonyl, Phenylsulfonyl, 2-Methylphenylsulfonyl, 2-Methoxyphenylsulfonyl oder 2-Chlorphenylsulfonyl.

Reste L³ sind, wie weiterhin auch Reste L⁶, L⁷, L⁸, L¹⁴, L¹⁵, L¹⁶ und L¹⁷, z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste L¹⁵, L¹⁶ und L¹⁷ sind weiterhin z.B. 2-Phenoxyethoxycarbonyl, 2- oder 3-Phenoxypropoxycarbonyl, 2- oder 4-Phenoxybutoxycarbonyl, Phenylazo, 4-Nitrophenylazo oder 2,4-Dinitro-6-bromphenylazo.

Reste L² und L⁸ sind weiterhin z.B. 2-Methoxyethoxy, 2-Ethoxyethoxy, 2- oder 3-Methoxypropoxy, 2- oder 3-Ethoxypropoxy, 2- oder 4-Methoxybutoxy, 2- oder 4-Ethoxybutoxy, 5-Methoxypentyloxy, 5-Ethoxypentyloxy, 6-Methoxyhexyloxy, 6-Ethoxyhexyloxy, Benzyloxy oder 1- oder 2-Phenylethoxy.

Reste L¹¹ sind weiterhin z.B. Dimethylamino, Diethylamino, Dipropylamino, Diisopropylamino, Dibutylamino, Dipentylamino, Dihexylamino oder N-Methyl-N-ethylamino.

Reste L¹² sind weiterhin z.B. 2-Methoxycarbonylethylthio oder 2-Ethoxycarbonylethylthio.

Reste R¹, R², R¹¹, R¹² und R¹³ sind weiterhin z.B. Cyclopentyl, Cyclohexyl oder Cycloheptyl.

Reste L⁹ sind weiterhin z.B. Phenyl, 2-, 3- oder 4-Methylphenyl, 2,4-Dimethylphenyl, 2-, 3- oder 4-Methoxyphenyl, 2-, 3- oder 4-Chlorphenyl, 2- oder 3-Methylthienyl oder 2-, 3- oder 4-Methylpyridyl.

Reste L¹, L⁶ und L⁷ sind weiterhin z.B. Formyl, Acetyl, Propionyl, Butyryl, Pentanoyl oder Hexanoyl.

Wenn L¹ oder L⁷ für den Rest -CH=T stehen, worin T sich von einer CH-aciden Verbindung H₂T ableitet, können als CH-acide Verbindungen H₂T z..B. Verbindungen der Formel 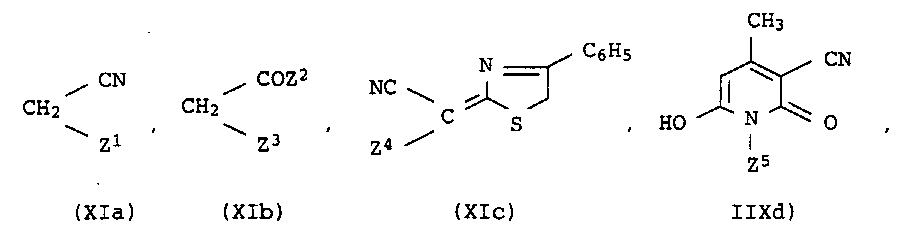 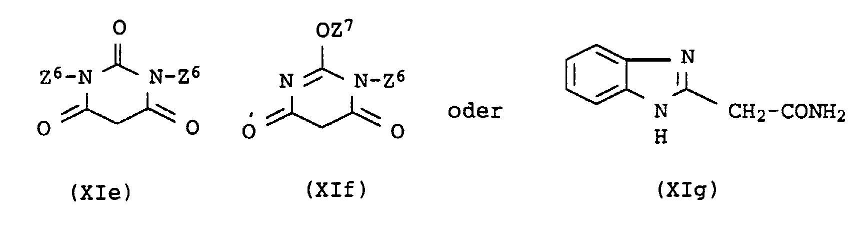 in Betracht kommen, wobei
- Z¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, C₁-C₄-Alkoxycarbonyl, C₃-C₄-Alkenyloxycarbonyl, Phenoxycarbonyl, Carbamoyl, C₁-C₄-Mono- oder Dialkylcarbamoyl, gegebenenfalls substituiertes Phenylcarbamoyl, gegebenenfalls substituiertes Phenyl, Benzthiazol-2-yl, Benzimidazol-2-yl, 5-Phenyl-1,3,4-thiadiazol-2-yl oder 2-Hydroxychinoxalin-3-yl,
- Z²: C₁-C₄-Alkyl, C₁-C₄-Alkoxy oder C₃-C₄-Alkenyloxy,
- Z³: C₁-C₄-Alkoxycarbonyl, C₃-C₄-Alkenyloxycarbonyl, Phenylcarbamoyl oder Benzimidazol-2-yl,
- Z⁴: Cyano, C₁-C₄-Alkoxycarbonyl oder C₃-C₄-Alkenyloxycarbonyl,
- Z⁵: Wasserstoff oder C₁-C₆-Alkyl,
- Z⁶: Wasserstoff, C₁-C₄-Alkyl oder Phenyl und
- Z⁷: C₁-C₄-Alkyl bedeuten.

Dabei ist der Rest, der sich von Verbindungen der Formel XIa, XIb oder XIc ableitet, worin Z¹ Cyano, C₁-C₄-Alkanoyl, C₁-C₄-Alkoxycarbonyl oder C₃-C₄-Alkenyloxycarbonyl, Z² C₁-C₄-Alkyl, C₁-C₄-Alkoxy oder C₃-C₄-Alkenyloxy, Z³ C₁-C₄-Alkoxycarbonyl oder C₃-C₄-Alkenyloxycarbonyl und Z⁴ Cyano bedeuten, hervorzuheben.

Besonders hervorzuheben ist dabei der Rest der sich von Verbindungen der Formel XIa, XIb oder XIc ableitet, worin Z¹ Cyano, C₁-C₄-Alkoxycarbonyl oder C₃-C₄-Alkenyloxycarbonyl, Z² C₁-C₄-Alkoxy oder C₂-C₄-Alkenyloxy, Z³ C₁-C₄-Alkoxycarbonyl oder C₃-C₄-Alkenyloxycarbonyl und Z⁴ Cyano bedeuten.

Reste R¹⁰, R¹¹ und R¹² sind weiterhin z.B. Heptyl, Octyl, 2-Ethylhexyl, Nonyl, Decyl, Undecyl, Dodecyl, 4,7-Dioxanonyl, 4,8-Dioxadecyl, 4,6-Dioxaundecyl, 3,6,9-Trioxaundecyl, 4,7,10-Trioxaundecyl oder 4,7,10-Trioxadodecyl.

Reste R¹, R², R¹⁰, R¹¹ und R¹² sind weiterhin z.B. 2-Methoxyethyl, 2-Ethoxyethyl, 2-Propoxyethyl, 2-Butoxyethyl, 2-Isobutoxyethyl, 2- oder 3-Methoxypropyl, 1-Methoxyprop-2-yl, 2- oder 3-Ethoxypropyl oder 2- oder 3-Propoxypropyl, 3,6-Dioxaheptyl, 3,6-Dioxaoctyl, 4,7-Dioxaoctyl, 2-Hydroxyethyl, 3-Hydroxypropyl, 4-Hydroxybutyl, 2-Cyclohexyloxyethyl, 2- oder 3-Cyclohexyloxypropyl, 2- oder 4-Cyclohexyloxybutyl, 2-Phenoxyethyl, 2-Phenoxypropyl, 3-Phenoxypropyl, 4-Phenoxybutyl, 2-Methoxycarbonylethyl, 2-Ethoxycarbonylethyl, 2- oder 3-Methoxycarbonylpropyl, 2- oder 3-Ethoxycarbonylpropyl, 2- oder 3-Butoxycarbonylpropyl, 4-Methoxycarbonylbutyl, 4-Ethoxycarbonylbutyl, 2-Cyanoethyl, 2- oder 3-Cyanopropyl, 4-Cyanobutyl, 2-Cyclohexylethyl, 2- oder 3-Cyclohexylpropyl, Benzyl, 1- oder 2-Phenylethyl, 2-Acetyloxyethyl, 2-Propionyloxyethyl, 2- oder 3-Acetyloxypropyl, Prop-2-en-1-yl, 2-Methyl-prop-2-en-1-yl, But-2-en-1-yl oder But-3-en-1-yl.

Wenn die Reste R¹¹ und R¹² zusammen mit dem sie verbindenden Stickstoffatom einen fünf- oder sechsgliedrigen gesättigten heterocyclischen Rest, der gegebenenfalls weitere Heteroatome enthält, bedeuten, so kommen dafür z.B. Pyrrolidinyl, Piperidinyl, Morpholinyl, Thiomorpholinyl, Thiomorpholinyl-S,S-dioxid, Piperazinyl oder N-(C₁-C₄-Alkyl)piperazinyl, wie N-Methyl- oder N-Ethylpiperazinyl, in Betracht.

Reste R¹⁰, R¹¹ und R¹² sind weiterhin z.B. Formyl, Acetyl, Propionyl, Butyryl, Isobutyryl, Pentanoyl, Hexanoyl, Heptanoyl, Octanoyl, 2-Ethylhexanoyl, Benzoyl, 2-, 3- oder 4-Methylbenzoyl, 2-, 3- oder 4-Methoxybenzoyl oder 2-, 3- oder 4-Chlorbenzoyl.

Es folgen beispielhafte Auf zählungen für die Reste in den Formeln Va bis Vd.

Geeignete Reste A¹ und A⁷ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Reste A⁷ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl, 4,8-Dioxadecyl, 3,6,9-Trioxadecyl oder 3,6,9-Trioxaundecyl.

Reste A¹ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl oder 2,4-Dimethoxyphenyl.

Reste A⁴ sind z.B. Fluor, Chlor, Brom, 2-, 3- oder 4-Methoxyphenyl oder 2-, 3- oder 4-Ethoxyphenyl.

Reste G² sind z.B. Methylsulfamoyl, Ethylsulfamoyl, Propylsulfamoyl, Isopropylsulfamoyl, Butylsulfamoyl, Pentylsulfamoyl, Hexylsulfamoyl, Heptylsulfamoyl, Octylsulfamoyl oder 4-Oxahexylsulfamoyl.

Es folgen beispielhaft Auf zählungen für die Reste in den Formeln VIa bis VIc.

Geeignete Reste W¹, W² und W⁴ z.B. Methyl, Ethyl, Propyl, Isopropyl, Butyl, Isobutyl, sec-Butyl oder tert-Butyl.

Reste W⁴ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Es folgen beispielhafte Aufzählungen für die Reste in den Formeln VIIa und VIIb.

Geeignete Reste Q¹, Q⁵, Q⁶, E¹, E², E³, E⁴, E⁵, E⁶, E⁷, E⁸ und E¹⁰ sind z.B. Methyl, Ethyl, Propyl, Isopropyl, Butyl, Isobutyl, sec-Butyl oder tert-Butyl.

Reste Q¹, Q⁶, E¹, E², E³, E⁴, E⁵, E⁶, E⁷ und E⁸ sind weiterhin z.B. Pentyl, Isopentyl, Neopentyl, tert-Pentyl, Hexyl, 2-Methylpentyl, Heptyl, 1-Ethylpentyl, Octyl, 2-Ethylhexyl oder Isooctyl.

Reste Q¹, E² und E³ sind weiterhin z.B. Nonyl, Isononyl, Decyl, Isodecyl, Undecyl oder Dodecyl.

Reste Q¹ sind weiterhin z.B. Tridecyl, Isotridecyl, Tetradecyl, Pentadecyl, Hexadecyl, Heptadecyl, Octadecyl, Nonadecyl, Eicosyl (Die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmanns Encyklopädie der technischen Chemie, 4. Auflage, Band 7, Seiten 215 bis 217, sowie Band 11, Seiten 435 und 436.), 2-Methoxycarbonylethyl, Benzyl, 1- oder 2-Phenylethyl, 3-Benzyloxypropyl, Phenoxymethyl, 6-Phenoxy-4-oxahexyl, 8-Phenoxy-4-oxaoctyl, 2-, 3- oder 4-Chlorphenyl oder 2-, 3- oder 4-Carboxylphenyl.

Reste Q¹ und E¹ sind weiterhin z.B. 2-Methoxyethyl, 2-Ethoxyethyl, 2-Propoxyethyl, 2-Isopropoxyethyl, 2-Butoxyethyl, 2- oder 3-Methoxypropyl, 2- oder 3-Ethoxypropyl, 2- oder 3-Propoxypropyl, 2- oder 3-Butoxypropyl, 2- oder 4-Methoxybutyl, 2- oder 4-Ethoxybutyl, 2- oder 4-Propoxybutyl, 3,6-Dioxaheptyl, 3,6-Dioxaoctyl, 4,8-Dioxanonyl, 3,7-Dioxaoctyl, 3,7-Dioxanonyl, 4,7-Dioxaoctyl, 4,7-Dioxanonyl, 2- oder 4-Butoxybutyl oder 4,8-Dioxadecyl.

Reste Q¹ sind weiterhin z.B. 3,6,9-Trioxadecyl, 3,6,9-Trioxaundecyl, 3,6,9-Trioxadodecyl, 3,6,9,12-Tetraoxatridecyl, 3,6,9,12-Tetraoxatetradecyl, 11-Oxahexadecyl, 13-Butyl-11-oxaheptadecyl oder 4,11-Dioxapentadecyl.

Reste Q³, E², E³ und E⁹ sind z.B. Methoxycarbonyl, Ethoxycarbonyl, Propoxycarbonyl, Isopropoxycarbonyl, Butoxycarbonyl, Isobutoxycarbonyl oder sec-Butoxycarbonyl.

Reste E⁹ sind weiterhin z.B. Mono- oder Dimethylcarbamoyl, Mono- oder Diethylcarbonyl, Mono- oder Dipropylcarbamoyl, Mono- oder Diisopropylcarbonyl, Mono- oder Dibutylcarbamoyl oder N-Methyl-N-butylcarbamoyl.

Reste E⁷, E⁸ und E¹⁰ sind weiterhin z.B. Methoxy, Ethoxy, Propoxy, Isopropoxy, Butoxy, Isobutoxy oder sec-Butoxy.

Reste E¹⁰ sind weiterhin z.B. Methylthio, Ethylthio, Propylthio, Isopropylthio, Butylthio, Isobutylthio oder sec-Butylthio.

Reste Q¹, E², E³ und E¹⁰ sind weiterhin z.B. Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl oder 2,4-Dimethoxyphenyl.

Reste Q¹, E² und E³ sind weiterhin z.B. 2-Hydroxyethyl, 2- oder 3-Hydroxypropyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Methoxycarbonylethyl, 2- oder 3-Methoxycarbonylpropyl, 2-Ethoxycarbonylethyl, 2- oder 3-Ethoxycarbonylpropyl, 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2- (2-Ethoxyethoxycarbonyloxy)ethyl oder 2- oder 3-(2-Ethoxyethoxycarbonyloxy)propyl.

Reste E² und E³ sind weiterhin z.B. Pyridyl, 2-, 3- oder 4-Methylpyridyl, 2-, 3- oder 4-Methoxypyridyl, Formyl, Acetyl, Propionyl, Butyryl, Isobutyryl, Pentanoyl, Hexanoyl, Heptanoyl, Octanoyl, 2-Ethylhexanoyl, Methylsulfonyl, Ethylsulfonyl, Propylsulfonyl, Isopropylsulfonyl, Butylsulfonyl, Cyclopentylsulfonyl, Cyclohexylsulfonyl, Cycloheptylsulfonyl, Phenylsulfonyl, Tolylsulfonyl, Pyridylsulfonyl, Benzoyl, 2-, 3- oder 4-Methylbenzoyl, 2-, 3- oder 4-Methoxybenzoyl, Thien-2-ylcarbonyl, Thien-3-ylcarbonyl, Cyclopentyl, Cyclohexyl oder Cycloheptyl.

Wenn E² und E³ oder E⁴ und E⁵ zusammen mit dem sie verbindenden Stickstoffatom einen 5- oder 6-gliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)piperazinyl in Betracht kommen.

Besonders geeignete Monoazofarbstoffe sind solche der Formel IIa, in der D¹ einen Rest der Formel IIIb bedeutet.

Besonders geeignete Monoazofarbstoffe sind weiterhin solche der Formel IIa, in der K¹ einen Rest der Formel IVa oder IVd bedeutet.

Besonders hervorzuheben sind Monoazofarbstoffe der Formel IIb 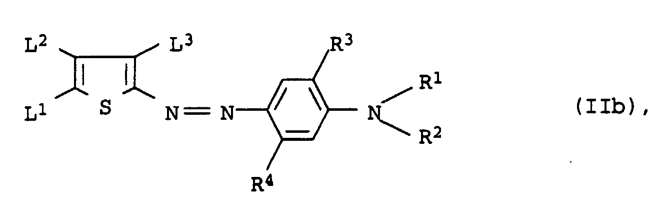 in der
- L¹: Nitro, Cyano, C₁-C₆-Alkanoyl oder einen Rest der Formel -CH=T, worin T die Bedeutung eines Restes einer CH-aciden Verbindung besitzt,
- L²: C₁-C₆-Alkyl, Halogen, gegebenenfalls durch Phenyl oder C₁-C₄-Alkoxy substituiertes C₁-C₆-Alkoxy,
- L³: Cyano, C₁-C₄-Alkoxycarbonyl oder Nitro,
- R¹ und R²: unabhängig voneinander jeweils Wasserstoff, gegebenenfalls substituiertes C₁-C₆-Alkyl, das durch 1 oder 2 Sauerstoffatome in Etherfunktion unterbrochen sein kann, oder C₃-C₆-Alkenyl,
- R³: Wasserstoff, C₁-C₆-Alkyl oder C₁-C₆-Alkoxy und
- R⁴: Wasserstoff, C₁-C₆-Alkyl, C₁-C₆-Alkoxy, C₁-C₆-Alkylsulfonylamino oder gegebenenfalls substituiertes C₁-C₆-Alkanoylamino bedeuten.

Besonders geeignete Methin- oder Azamethinfarbstoffe gehorchen der Formel VIIa oder VIIb, worin R⁵ Methyl bedeutet.

Besonders geeignete Methin- oder Azamethinfarbstoffe gehorchen weiterhin der Formel VIIa oder VIIb, worin Q⁵ Cyano bedeutet.

Besonders geeignete Methin- oder Azamethinfarbstoffe gehorchen weiterhin der Formel VIIa oder VIIb, worin Q⁴ Sauerstoff bedeutet.

Besonders geeignete Azamethinfarbstoffe gehorchen weiterhin der Formel VII, in der X Stickstoff bedeutet.

Besonders geeignete Methinfarbstoffe gehorchen weiterhin der Formel VII, in der X CH bedeutet.

Besonders geeignete Methin- oder Azamethinfarbstoffe gehorchen weiterhin der Formel VIIa oder VIIb, worin Q² einen Rest aus der Pyrrol-, Thiazol-, oder Thiophenreihe bedeutet.

Besonders geeignete Methin- oder Azamethinfarbstoffe gehorchen weiterhin der Formel VIIa, worin Q¹ C₁-C₁₂-Alkyl, das gegebenenfalls durch C₁-C₆-Alkanoyloxy, C₁-C₈-Alkoxycarbonyl, deren Alkylkette jeweils durch 1 oder 2 Sauerstoffatome in Etherfunktion unterbrochen sein kann, Phenyl oder C₁-C₄-Alkylphenyl substituiert ist und durch 1 oder 2 Sauerstoffatome in Etherfunktion unterbrochen sein kann, bedeutet.

Besonders geeignete Methin- oder Azamethinfarbstoffe gehorchen weiterhin der Formel VIIb, worin Q⁶ einen Rest der Formel NE²E³ bedeutet, wobei E² und E³ unabhängig voneinander jeweils für gegebenenfalls substituiertes C₁-C₁₂-Alkanoyl oder gegebenenfalls substituiertes Benzoyl oder E² auch für Wasserstoff stehen.

Besonders hervorzuheben sind Methin- oder Azamethinfarbstoffe der Formel VIIb, worin Q⁶ einen Rest der Formel NE²E³ bedeutet, wobei E² und E³ unabhängig voneinander jeweils für C₁-C₈-Alkanoyl oder Benzoyl oder E² auch für Wasserstoff stehen.

Weiterhin besonders hervorzuheben sind Methin- oder Azamethinfarbstoffe der Formel VIIa worin Q¹ Alkyl, Alkoxyalkyl, Alkanoyloxyalkyl oder Alkoxycarbonylalkyl, wobei diese Reste jeweils bis zu 12 Kohlenstoffatome aufweisen, gegebenenfalls durch Methyl substituiertes Benzyl oder gegebenenfalls durch Methyl substituiertes Phenyl bedeutet.

Weiterhin besonders hervorzuheben sind Methin- oder Azamethinfarbstoffe der Formel VIIa oder VIIb, worin Q² einen Rest der obengenannten Formel VIIIa oder VIIIc, dabei insbesondere VIIIa, bedeutet, wobei
- E⁴ und E⁵: unabhängig voneinander für Alkyl, Alkoxyalkyl, Alkanoyloxyalkyl oder Alkoxycarbonylalkyl, wobei diese Reste jeweils bis zu 12 Kohlenstoffatome aufweisen, Wasserstoff, gegebenenfalls durch Methyl substituiertes Benzyl oder gegebenenfalls durch Methyl substituiertes Phenyl,
- E⁶: für Wasserstoff, C₁-C₄-Alkyl, gegebenenfalls durch C₁-C₄-Alkyl oder C₁-C₄-Alkoxy substituiertes Phenyl, Benzyl oder Thienyl,
- E⁹: für Cyano,
- E¹⁰: für Halogen, Wasserstoff, C₁-C₄-Alkyl, C₁-C₄-Alkoxy, C₁-C₄-Alkylthio, gegebenenfalls durch C₁-C₄-Alkyl substituiertes Phenyl oder Thienyl und
- n: für 0 stehen.

Besonders geeignete Chinophthalonfarbstoffe gehorchen der Formel IX in der G⁴ Wasserstoff oder Brom bedeutet.

Die Monoazofarbstoffe der Formel IIa sind an sich bekannt und in großer Zahl beschrieben, z.B. in K. Venkataraman "The Chemistry of Synthetic Dyes", Vol. VI, Academic Press, New York, London, 1972, oder in der EP-A-201 896.

Die Anthrachinonfarbstoffe der Formel Va bis Vc sind ebenfalls an sich bekannt und z.B. in D.R. Waring, G. Hallas "The Chemistry and Application of Dyes", Seiten 107 bis 118, Plenum Press, New York, London, 1990, beschrieben.

Die Cumarinfarbstoffe der Formel VIa bis VIc sind ebenfalls an sich bekannt und z.B. in Ullmanns Encyklopädie der technischen Chemie, 4. Auflage, Band 17, Seite 469, beschrieben.

Die Methin- oder Azamethinfarbstoffe der Formel VIIa und VIIb sind ebenfalls an sich bekannt und z.B. in der US-A-5 079 365 sowie WO-A-9219684 beschrieben.

Die Chinophthalonfarbstoffe der Formel IX sind ebenfalls an sich bekannt und z.B. in der EP-83 553 beschrieben.

Der Nitrofarbstoff der Formel X ist unter der Bezeichnung C.I. Disperse Yellow 42 (10 338) gebräuchlich.

Geeignete Farbstoffe, die Carboxyl- und/oder Sulfonsäuregruppen aufweisen, werden im folgenden näher beschrieben. Dabei handelt es sich insbesondere um Azo- oder Anthrachinonfarbstoffe.

Bei den Azofarbstoffen sind Mono- oder Disazofarbstoffe, die auch metallisiert sein können, hervorzuheben, insbesondere solche, die 1 bis 6 Carboxyl- und/oder Sulfonsäuregruppen aufweisen.

Wichtige Azofarbstoffe sind z.B. solche, deren Diazokomponente sich von einem Anilin- oder Aminonaphthalin ableitet.

Wichtige Azofarbstoffe sind weiterhin z.B. solche, deren Kupplungskomponente sich von einem Anilin-, Naphthalin-, Pyrazolon, Aminopyrazol, Diaminopyridin, Pyridon oder Acylacetarylid ableitet.

Zu nennen sind beispielsweise metallfreie oder metallisierte (Metallkomplexe) Azofarbstoffe aus der Phenyl-azo-naphthalin-, Phenyl-azo-1-phenyipyrazoi-5-on-, Phenyl-azo-benzol-, Naphthyl-azo-benzol-, Phenyl-azo-aminonaphthalin-, Naphthyl-azo-naphthalin-, Naphthyl-azo-1-phenylpyrazol-5-on-, Phenyl-azo-pyridon-, Phenyl-azo-aminopyridin-, Naphthyl -azo-pyridon-, Naphthyl-azo-aminopyridin- oder Stilbyl-azo-benzolreihe.

Die Azofarbstoffe können zusätzlich auch noch eine reaktive Gruppe, z.B. den Rest der Formel 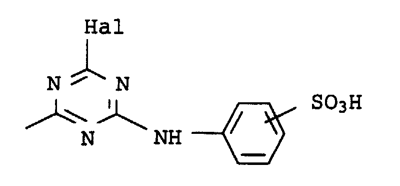 aufweisen, der über eine gegebenenfalls substituierte Aminogruppe entweder an die Diazo- oder Kupplungskomponente geknüpft ist.

Von besonderer Bedeutung sind Azofarbstoffe der Formel IIc

D²-N=N-K² (IIc),

in der D² für einen Rest der Formel 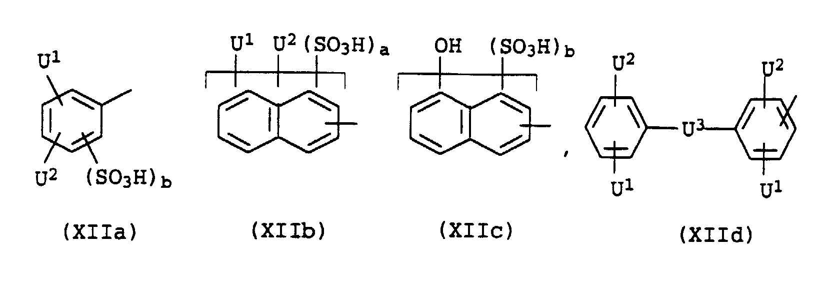 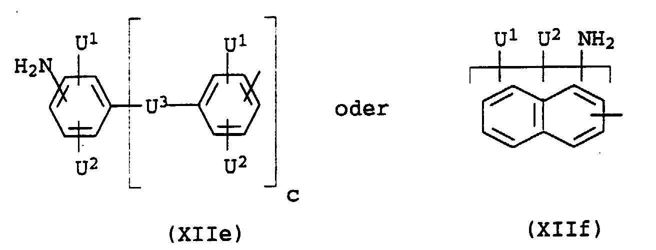 und
- K²: für einen Rest der Formel 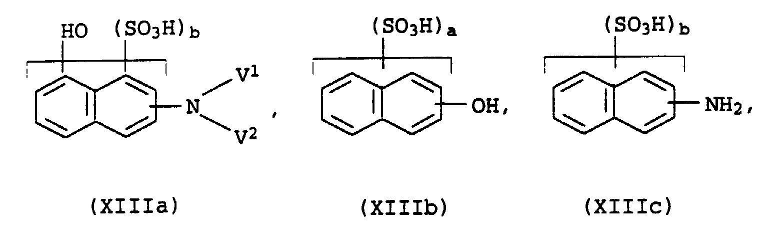 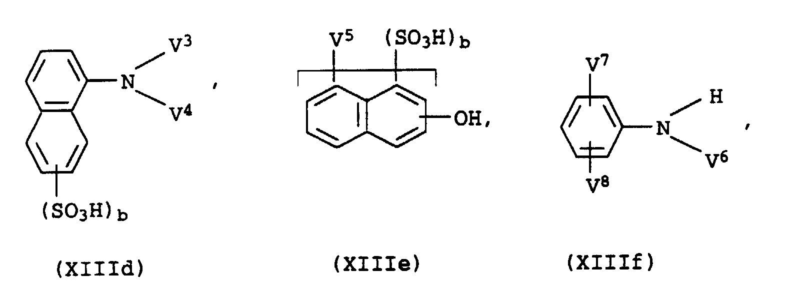 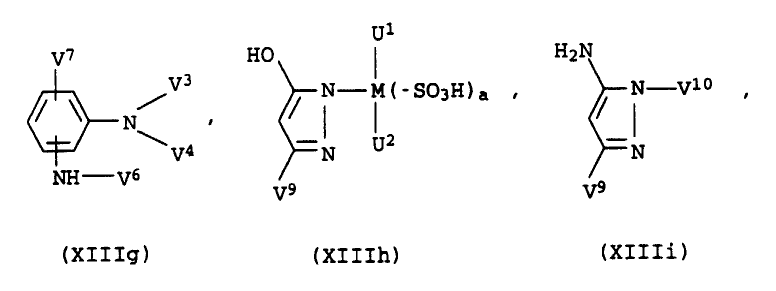 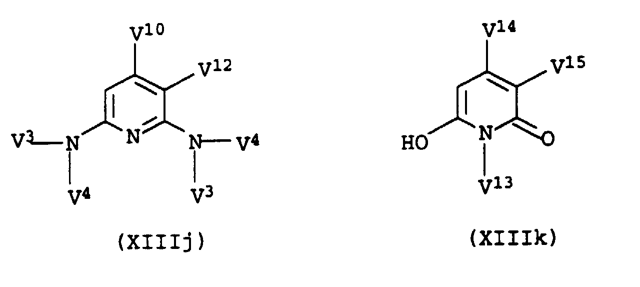 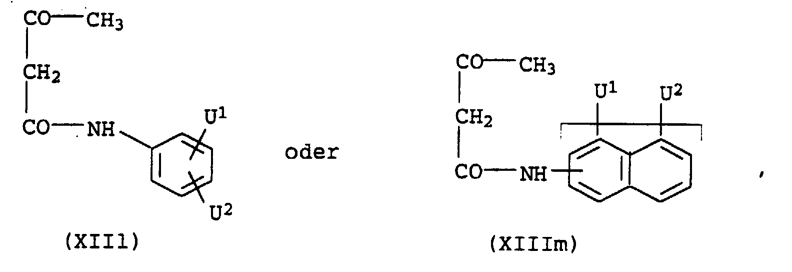 stehen, worin
- a: 0, 1, 2 oder 3,
- b: 0, 1 oder 2,
- c: 0 oder 1,
- U¹: Wasserstoff, Methyl, Ethyl, Methoxy, Ethoxy, Acetyl, Cyano, Carboxyl, Hydroxysulfonyl, C₁-C₄-Alkoxycarbonyl, Hydroxy, Carbamoyl, C₁-C₄-Mono- oder Dialkylcarbamoyl, Fluor, Chlor, Brom oder Trifluormethyl,
- U²: Wasserstoff, Methyl, Ethyl, Methoxy, Ethoxy, Cyano, Carboxyl, Hydroxysulfonyl, Acetylamino, C₁-C₄-Alkoxycarbonyl, Carbamoyl, C₁-C₄-Mono- oder Dialkylcarbamoyl, Fluor, Chlor, Nitro, Sulfamoyl, C₁-C₄-Mono- oder Dialkylsulfamoyl, C₁-C₄-Alkylsulfonyl, Phenylsulfonyl oder Phenoxy,
- U³: eine direkte Bindung, Sauerstoff, Schwefel oder die Gruppe -NHCO-, NH-CO-NH-, -CONH-, -CO-, -NHSO₂-, -SO₂NH-, -SO₂-, -CH=CH-, -CH₂-CH₂-, -CH₂-, -NH-, oder -N=N-,
- V¹: Wasserstoff oder C₁-C₄-Alkyl,
- V²: Wasserstoff, C₁-C₄-Alkyl oder Phenyl, das durch C₁-C₅-Alkyl, C₁-C₄-Alkoxy, Chlor, Brom oder Hydroxysulfonyl substituiert sein kann,
- V³: Wasserstoff oder C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann,
- V⁴: Wasserstoff, C₁-C₄-Alkyl, das durch Hydroxy, Cyano, Carboxyl, Hydroxysulfonyl, Sulfato, Methoxycarbonyl, Ethoxycarbonyl oder Acetoxy substituiert sein kann, Benzyl oder Phenyl, das durch C₁-C₄-Alkyl, C₁-C₄-Alkoxy, Chlor oder Hydroxysulfonyl substituiert sein kann,
- V⁵: C₁-C₆-Alkylureido, Phenylureido, das durch Chlor, Methyl, Methoxy, Nitro, Hydroxysulfonyl oder Carboxyl substituiert sein kann, C₁-C₆-Alkanoylamino, das durch Hydroxysulfonyl oder Chlor substituiert sein kann, Cyclohexanoylamino, Benzoylamino, das durch Chlor, Methyl, Methoxy, Nitro, Hydroxylsulfonyl oder Carboxyl substituiert sein kann, oder Hydroxy,
- V⁶: Wasserstoff, C₁-C₆-Alkyl, das durch Phenyl, C₁-C₄-Alkoxy, Hydroxy, Phenoxy oder C₁-C₄-Alkanoyloxy substituiert sein kann, C₅-C₇-Cycloalkyl, Hydroxysulfonylphenyl, C₁-C₄-Alkanoyl, Carbamoyl, C₁-C₄-Mono- oder Dialkylcarbamoyl, Phenylcarbamoyl oder Cyclohexylcarbamoyl,
- V⁷: Methoxy, Ethoxy, Chlor, Brom, Hydroxysulfonyl, Acetylamino, Amino, Ureido, Methylsulfonylamino, Ethylsulfonylamino, Dimethylaminosulfonylamino, Methylamino, Ethylamino, Dimethylamino oder Diethylamino,
- V⁸: Wasserstoff, Methyl, Ethyl, Methoxy, Ethoxy, Hydroxysulfonyl, Chlor oder Brom,
- M: den Rest eines Benzol- oder Naphthalinrings,
- V⁹: Methyl, Carboxyl, C₁-C₄-Alkoxycarbonyl oder Phenyl,
- V¹⁰: C₁-C₄-Alkyl, Cyclohexyl, Benzyl oder Phenyl, das gegebenenfalls durch Fluor, Chlor, Brom, Methyl, Methoxy, Nitro, Hydroxysulfonyl, Carboxyl, Acetyl, Acetylamino, Methylsulfonyl, Sulfamoyl oder Carbamoyl substituiert ist,
- V¹¹: Wasserstoff oder C₁-C₄-Alkyl, das durch Methoxy, Ethoxy oder Cyano substituiert sein kann,
- V¹²: Wasserstoff, Methyl, Hydroxysulfonylmethyl, Hydroxysulfonyl, Cyano oder Carbamoyl,
- V¹³: Wasserstoff, C₁-C₄-Alkyl, das durch Phenyl, Hydroxysulfonylphenyl, Hydroxy, Amino, Methoxy, Ethoxy, Carboxyl, Hydroxysulfonyl, Acetylamino, Benzoylamino oder Cyano substituiert sein kann, Cyclohexyl, Phenyl, das gegebenenfalls durch Carboxyl, Hydroxysulfonyl, Benzoylamino, Acetylamino, Methyl, Methoxy, Cyano oder Chlor substituiert ist, oder Amino, das durch Phenyl, C₁-C₄-Alkyl, Acetyl oder Benzoyl substituiert ist,
- V¹⁴: C₁-C₄-Alkyl, Phenyl, Hydroxy, Cyano, Acetyl, Benzoyl, Carboxyl, Methoxycarbonyl, Carbamoyl oder Hydroxysulfonylmethyl und
- V¹⁵: Wasserstoff, Chlor, Brom, Acetylamino, Amino, Nitro, Hydroxysulfonyl, Sulfamoyl, Methylsulfonyl, Phenylsulfonyl, Carboxyl, Methoxycarbonyl, Acetyl, Benzoyl, Carbamoyl, Cyano oder Hydroxysulfonylmethyl bedeuten,
mit der Maßgabe, daß mindestens eine Carboxyl- und/oder Sulfonsäuregruppe im Molekül vorhanden ist.

Aromatische Amine, die sich als Diazokomponenten eignen und sich von der Formel XIIa, XIIb, XIIc oder XIId ableiten, sind beispielsweise Anilin, 2-Methoxyanilin, 2-Methylanilin, 4-Chlor-2-aminoanisol, 4-Methylanilin, 4-Methoxyanilin, 2-Methoxy-5-methylanilin, 2,5-Dimethoxyanilin, 2,5-Dimethylanilin, 2,4-Dimethylanilin, 2,5-Diethoxyanilin, 2-Chloranilin, 3-Chloranilin, 4-Chloranilin, 2,5-Dichloranilin, 4-Chlor-2-nitroanilin, 4-Chlor-2-methylanilin, 3-Chlor-2-methylanilin, 4-Chlor-2-aminotoluol, 4-Phenylsulfonylanilin, 2-Ethoxy-1-naphthylamin, 1-Naphthylamin, 2-Naphthylamin, 4-Methylsulfonylanilin, 2,4-Dichloranilin-5-carbonsäure, 2-Aminobenzoesäure, 4-Aminobenzoesäure, 3-Aminobenzoesäure, 3-Chloranilin-6-carbonsäure, Anilin-2-oder -3- oder -4-sulfonsäure, Anilin-2,5-disulfonsäure, Anilin-2,4-disulfonsäure, Anilin-3,5-disulfonsäure, 2-Aminotoluol-4-sulfonsäure, 2-Aminoanisol-5-sulfonsäure, 2-Ethoxyanilin-5-sulfonsäure, 2-Ethoxyanilin-4-sulfonsäure, 4-Hydroxysulfonyl-2-aminobenzoesäure, 2,5-Dimethoxyanilin-4-sulfonsäure, 2,4-Dimethoxyanilin-5-sulfonsäure, 2-Methoxy-5-methylanilin-4-sulfonsäure, 4-Aminoanisol-3-sulfonsäure, 4-Aminotoluol-3-sulfonsäure, 2-Aminotoluol-5-sulfonsäure, 2-Chloranilin-4-sulfonsäure, 2-Chloranilin-5-sulfonsäure, 2-Bromanilin-4-sulfonsäure, 2,6-Dichloranilin-4-sulfonsäure, 2,6-Dimethylanilin-3- oder -4-sulfonsäure, 3-Acetylaminoanilin-6-sulfonsäure, 4-Acetylaminoanilin-2-sulfonylsäure, 1-Aminonaphthalin-3-, -4-, -5-, -6- oder -7-sulfonsäure, 1-Aminonaphthalin-3,7-disulfonsäure, 1-Aminonaphthalin-3,6,8-trisulfonsäure, 1-Aminonaphthalin-4,6,8-trisulfonsäure, 2-Naphthylamin-5-, -6- oder -8-sulfonsäure, 2-Aminonaphthalin-3, 6, 8-trisulfonsäure, 2-Aminonaphthalin-6,8-disulfonsäure, 2-Aminonaphthalin-1,6-disulfonsäure, 2-Aminonaphthalin-1-sulfonsäure, 2-Aminonaphthalin-1,5-disulfonsäure, 2-Aminonaphthalin-3, 6 -disulfonsäure, 2-Aminonaphthalin-4,8-disulfonsäure, 2-Aminophenol-4-sulfonsäure, 2-Aminophenol-5-sulfonsäure, 3-Aminophenol-6-sulfonsäure, 1-Hydroxy-2-aminonaphthalin-5,8-oder -4,6-disulfonsäure, 4-Aminodiphenylamin, 4-Amino-4'-methoxydiphenylamin, 4-Amino-4'-methoxydiphenylamin-3-sulfonsäure, 4-(2'-Methylphenylazo)-2-methylanilin, 4-Aminoazobenzol, 4'-Nitrophenylazo-1-aminonaphthalin, 4-(6'-Hydroxysulfonylnaphthylazo)-1-aminonaphthalin, 4-(2',5'-Dihydroxysulfonylphenylazo)-1-aminonaphthalin, 4'-Amino-3'-methyl-3-nitrobenzophenon, 4-Aminobenzophenon, 4-(4' -Aminophenylazo)benzolsulfonsäure, 4-(4'-Amino-2'- oder 3'-methoxyphenylazo)benzolsulfonsäure oder 2 -Ethoxy-1-naphthylamin-6-sulfonsäure.

Aromatische Diamine, die sich als Tetrazokomponenten eignen und sich von der Formel XIIe oder XIIf ableiten, sind beispielsweise 1,3-Diaminobenzol, 1,3-Diaminobenzol-4-sulfonsäure, 1,4-Diaminobenzol, 1,4-Diaminobenzol-2-sulfonsäure, 1,4-Diamino-2-methylbenzol, 1,4-Diamino-2-methoxybenzol, 1,3-Diamino-4-methylbenzol, 1,3-Diaminobenzol-5-sulfonsäure, 1,3-Diamino-5-methylbenzol, 1,6-Diaminonaphthalin-4-sulfonsäure, 2,6-Diaminonaphthalin-4,8-disulfonsäure, 3,3'-Diaminodiphenylsulfon, 4,4'-Diaminodiphenylsulfon, 4,4'-Diaminostilben-2,2'-disulfonsäure, 2,7'-Diaminodiphenylsulfon, 2,7'-Diaminodiphenylsulfon-4,5-disulfonsäure, 4,4'-Diaminobenzophenon, 4,4'-Diamino-3,3'-dinitrobenzophenon, 3,3' -Diamino-4,4'-dichiorbenzophenon, 4,4'- oder 3,3'-Diaminodiphenyl, 4,4'-Diamino-3,3'-dichlordiphenyl, 4,4'-Diamino-3,3'-dimethoxy-, -3,3'-dimethyl-, -2,2'-dimethyl-, -2,2'-dichlor- oder -3,3'-diethoxydiphenyl, 4,4'-Diamino-3,3'-dimethyl-6,6'-dinitrodiphenyl, 4,4'-Diaminodiphenyl-2,2'- oder -3,3'-disulfonsäure, 4,4'-Diamino-3,3'-dimethyl-, -3,3'-dimethoxy oder -2,2'-dimethoxydiphenyl-6,6'-disulfonsäure, 4,4'-Diamino-2,2', 5,5'-tetrachiordiphenyi, 4,4'-Diamino-3,3'-dinitrodiphenyl, 4,4'-Diamino-2,2'-dichlor-5,5'-dimethoxydiphenyl, 4,4'-Diaminodiphenyl-2,2'- oder -3,3'-dicarbonsäure, 4,4'-Diamino-3,3'-dimethyldiphenyl-5,5'-disulfonsäure, 4,4'-Diamino-2-nitrodiphenyl, 4,4'-Diamino-3-ethoxy- oder -3-hydroxysulfonyldiphenyl, 4,4'-Diamino-3,3'-dimethyldiphenyl-5-sulfonsäure, 4,4'-Diaminodiphenylmethan, 4,4'-Diamino-3,3' -dimethyldiphenylmethan, 4,4'-Diamino-2,2', 3,3'-tetramethyldiphenylmethan, 4,4'-Diaminodiphenylethan, 4,4'-Diaminostilben oder 4,4'-Diaminodiphenylmethan-3,3'-dicarbonsäure.

Reste K² sind z.B. Aniline, wie o- oder m-Toluidin, o- oder m-Anisidin, Kresidin, 2,5-Dimethylanilin, 2,5-Dimethoxyanilin, m-Aminoacetanilid, 3-Amino-4-methoxyacetanilid, 3-Amino-4-methylacetanilid, m-Aminophenylharnstoff, N-Methylanilin, N-Methyl-m-toluidin, N-Ethylanilin, N-Ethyl-m-toluidin, N-(2-Hydroxyethyl)anilin oder N-(2-Hydroxyethyl)-m-toluidin.

Reste K² sind weiterhin z.B. Naphtholsulfonsäuren, wie 1-Naphthol-3-sulfonsäure, 1-Naphthol-4-sulfonsäure, 1-Naphthol-5-sulfonsäure, 1-Naphthol-8-sulfonsäure, 1-Naphthol-3,6-disulfonsäure, 1-Naphthol-3,8-disulfonsäure, 2-Naphthol-5-sulfonsäure, 2-Naphthol-6-sulfonsäure, 2-Naphthol-7-sulfonsäure, 2-Naphthol-8-sulfonsäure, 2-Naphthol-3,6-disulfonsäure, 2-Naphthol-6,8-disulfonsäure, 2-Naphthol-3,6,8-trisulfonsäure, 1,8-Dihydroxynaphthalin-3,6-disulfonsäure, 2,6-Dihydroxynaphthalin-8-sulfonsäure oder 2,8-Dihydroxynaphthalin-6-sulfonsäure.

Reste K² sind weiterhin z.B. Naphthylamine, wie 1-Naphthylamin, N-Phenyl-1-naphthylamin, N-Ethyl-1-naphthylamin, N-Phenyl-2-naphthylamin, 1-Naphthol, 2-Naphthol, 1,5-Dihydroxynaphthalin, 1,6-Dihydroxynaphthalin, 1,7-Dihydroxynaphthalin oder 2,7-Dihydroxynaphthalin.

Reste K² sind weiterhin z.B. Aminonaphthalinsulfonsäuren, wie 1-Naphthylamin-6-sulfonsäure, 1-Naphthylamin-7-sulfonsäure, 1-Naphthylamin-8-sulfonsäure, 2-Naphthylamin-3,6-disulfonsäure, 2-Naphthylamin-5,7-disulfonsäure oder 2-Naphthylamin-6,8-disulfonsäure.

Reste K² sind weiterhin z.B. Aminonaphtholsulfonsäuren, wie 1-Amino-5-hydroxynaphthalin-7-sulfonsäure, 1-Amino-8-hydroxynaphthalin-4-sulfonsäure, 1-Amino-8-hydroxynaphthalin-2,4-disuifonsäure, 1-Amino-8-hydroxynaphthalin-3,6-disulfonsäure, 1-Amino-8-hydroxynaphthalin-4,6-disulfonsäure, 2-Amino-5-hydroxynaphthalin-7-sulfonsäure, 2-Amino-8-hydroxynaphthalin-6-sulfonsäure, 2-Amino-8-hydroxynaphthalin-3,6-disulfonsäure, 2-Amino-5-hydroxynaphthalin-1,7-disulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure, 1-Benzoylamino-8-hydroxynaphthalin-4,6-disulfonsäure, 1-Acetylamino-5-hydroxynaphthalin-7-sulfonsäure, 2-Methylamino-8-hydroxynaphthalin-6-sulfonsäure, 2-Methylamino-8-hydroxynaphthalin-6-sulfonsäure oder 2-(3'- oder 4'-Hydroxysulfonylphenyl)amino-8-hydroxynaphthalin-6-sulfonsäure.

Reste K² sind weiterhin z.B. Pyrazolone, wie 1-Phenyl-, 1-(2'-Chlorphenyl)-, 1-(2'-Methoxyphenyl)-, 1-(2'-Methylphenyl)-, 1-(1',5'-Dichlorphenyl)-, 1-(2',6'-Dichlorphenyl)-, 1-(2'-Methyl-6'-chlorphenyl) -, 1-(2'-Methoxy-5'-methylphenyl)-, 1-(2'-Methoxy-5'-hydroxysulfonylphenyl)-, 1-(2',5'-Dihydroxysulfonylphenyl)-, 1-(2'-Carboxyphenyl)-, 1-(3 -Hydroxysulfonylphenyl)-, 1-(4'-Hydroxysulfonylphenyl)- oder 1-(3'-Sulfamoylphenyl)-3-carboxylpyrazol-5-on, 1-(3'- oder 4' -Hydroxysulfonylphenyl)-, 1-(2'-Chlor-4'- oder -5'-hydroxysulfonylphenyl)-, 1-(2'-Methyl-4'-hydroxysulfonylphenyl)-, 1-(2',5'-Dichlorphenyl)-, 1-(4',8'-Dihydroxysulfonyl-1-naphthyl)-, 1-(6'-Hyroxysulfonylnaphth-1-yl)-3-methylpyrazol-5-on, 1-Phenylpyrazol-5-on-3-carbonsäureethylester, Pyrazol-5-on-3-carbonsäureethylester oder Pyrazol-5-on-3-carbonsäure.

Reste K² sind weiterhin z.B. Aminopyrazole, wie 1-Methyl-, 1-Ethyl-, 1-Propyl-, 1-Butyl-, 1-Cyclohexyl-, 1-Benzyl- oder 1-Phenyl-5-aminopyrazol, 1-(4 -Chlorphenyl)- oder 1-(4'-Methylphenyl)-5-aminopyrazol oder 1-Phenyl-3-methyl-5-aminopyrazol.

Reste K² sind weiterhin z.B. Pyridone, wie 1-Ethyl-2-hydroxy-4-methyl-5-carbamoylpyrid-6-on, 1-(2'-Hydroxyethyl)-2-hydroxy-4-methyl-5-carbamoylpyrid-6-on, 1-Phenyl-2-hydroxy-4-methyl-5-carbamoylpyrid-6-on, 1-Ethyl-2-hydroxy-4-methyl-5-cyanopyrid-6-on, 1-Ethyl-2-hydroxy-4-methyl-5-hydroxysulfonylmethyipyrid-6-on, 1-Methyl-2-hydroxy-4-methyl-5-cyanopyrid-6-on, 1-Methyl-2-hydroxy-5-acetylpyrid-6-on, 1,4-Dimethyl-2-hydroxy-5-cyanopyrid-6-on, 1,4-Dimethyl-5-carbamoylpyrid-6-on, 2,6-Dihydroxy-4-ethyl- 5-cyanopyridin, 2,6-Dihydroxy-4-ethyl-5-carbamoylpyridin, 1-Ethyl-2-hydroxy-4-methyl-5-hydroxysulfonylmethylpyrid-6-on, 1-Methyl-2-hydroxy-4-methyl-5-methylsulfonylpyrid-6-on oder 1-Carboxymethyl-2-hydroxy-4-ethyl-5-phenylsulfonylpyrid-6-on.

Anstelle der Azofarbstoffe der Formel IIc können im erfindungsgemäßen Verfahren auch die entsprechenden Metallkomplexfarbstoffe zur Anwendung gelangen.

Als komplexierende Metalle kommen dabei insbesondere Kupfer, Kobalt, Chrom, Nickel oder Eisen in Betracht, wobei Kupfer, Kobalt oder Chrom bevorzugt sind. Besonders zu nennen sind symmetrische oder unsymmetrische 1:1- oder 1:2-Chromkomplexe. Dabei befinden sich die metallisierten Gruppen in den vorstehend genannten Azofarbstoffen vorzugsweise jeweils in ortho-Stellung zur Azogruppe, z.B. in Form von o,o-Dihydroxy-, o-Hydroxy-o'-carboxy-, o-Carboxy-o'-amino- oder o-Hydroxy-o'-amino-azogruppierungen.

Bevorzugt sind Farbstoffe der Formel IIc, in der D² für einen Rest der Formel XIIa, XIIb, XIIc, XIId, XIIe oder XIIf steht, worin U¹ Wasserstoff, Methyl, Methoxy, Carboxyl, Hydroxysulfonyl, Hydroxy oder Chlor, U² Wasserstoff, Methyl, Methoxy, Carboxyl, Hydroxysulfonyl, Acetylamino oder Chlor und U³ die Gruppe -CO-, -SO₂-, -CH=CH-, -CH₂-CH₂-, -CH₂- oder -N=N- bedeuten.

Bevorzugt sind weiterhin Farbstoffe der Formel IIc, in denen sich der Rest K² von Kupplungskomponenten ableitet, die Sulfonsäuren- und/oder Carboxylgruppen aufweisen und die in ortho- oder para-Stellung zu einer Hydroxy- und/oder Aminogruppe kuppeln. Als Beispiele für solche Kupplungskomponenten seien 2-Acetylamino-5-hydroxynaphthalin-7-sulfonsäure, 2-Acetylamino-8-hydroxynaphthalin-6-sulfonsäure, 1-Acetylamino-8-hydroxynaphthalin-3,6-disulfonsäure, 1-Benzoylamino-8-hydroxynaphthalin-3,6-disulfonsäure, 1-Acetylamino-8-hydroxynaphthalin-4,6-disulfonsäure oder 1-Benzoylamino-8-hydroxynaphthalin-4,6-disulfonsäure genannt.

Bevorzugt sind Azofarbstoffe der Formel XIV 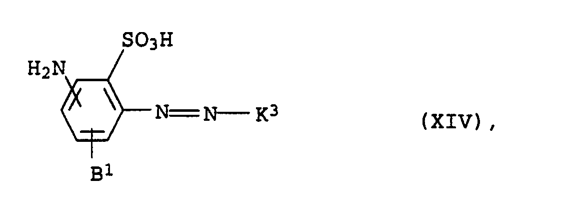 in der B¹ Wasserstoff, C₁-C₄-Alkyl, C₁-C₄-Alkoxy, Chlor oder Hydroxysulfonyl und K³ den Rest einer Kupplungskomponente der Naphthalin-, Pyrazolon- oder Pyridonreihe bedeuten.

Weiterhin besonders bevorzugt sind Azofarbstoffe der Formel XV 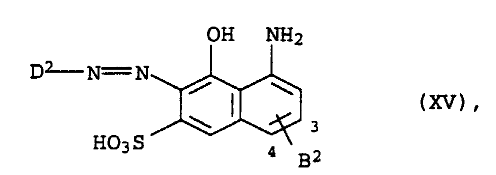 in der D² die obengenannte Bedeutung besitzt und B² für Hydroxysulfonyl in Ringposition 3 oder 4 steht.

Weiterhin besonders bevorzugt sind Azofarbstoffe der Formel XVI 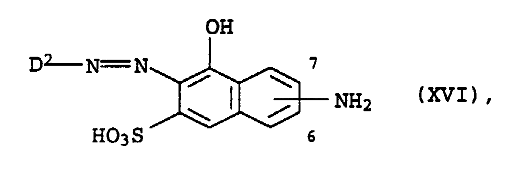 in der D² die obengenannte Bedeutung besitzt und die Aminogruppe in Ringposition 6 oder 7 steht.

Weiterhin-sind wertvolle Verbindungen solche der Formel XVII 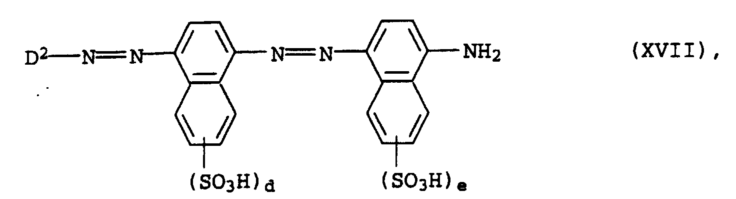 in der D² die obengenannte Bedeutung besitzt und d und e unabhängig voneinander jeweils für 0, 1 oder 2 stehen.

Weiterhin sind wertvolle Verbindungen solche der Formel XVIII 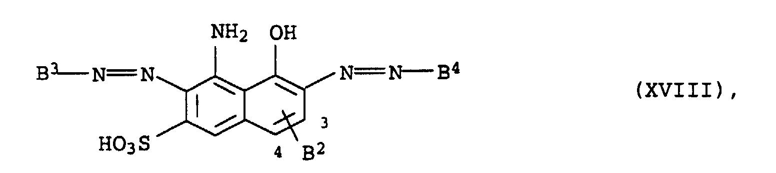 in der B² die obengenannte Bedeutung besitzt und einer der beiden Reste B³ und B⁴ für den Rest D², wobei dieser die obengenannte Bedeutung besitzt und der andere für 3-Amino-6-hydroxysulfonylphenyl oder auch beide Reste B³ und B⁴ für 3-Amino-6-hydroxysulfonylphenyl stehen.

Besonders zu nennen ist auch der symmetrische 1:2-Chrom komplexfarbstoff, dem der Azofarbstoff 1-(2-Hydroxy-4-hydroxysulfonyl-6-nitronaphth-1-ylazo)-2-hydroxynaphthalin zugrundeliegt.

Weiterhin können im erfindungsgemäßen Verfahren auch saure Anthrachinonfarbstoffe zur Anwendung gelangen. Solche Anthrachinone sind an sich bekannt und beispielsweise in K. Venkataraman "The Chemistry of Synthetic Dyes", Vol. II, Academic Press, New York, 1952, beschrieben.

Bevorzugt sind saure Anthrachinonfarbstoffe aus der Reihe der 1,4-Diaminoanthrachinone. Sie gehorchen z.B. der Formel XVIII 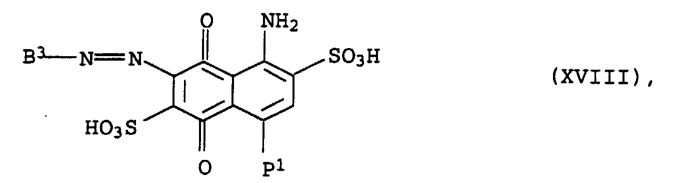 in der P¹ für Amino oder einen Rest der Formel 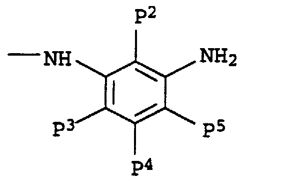 steht,
worin P² und P³ unabhängig voneinander jeweils Wasserstoff oder Methyl und einer der beiden Reste P⁴ und P⁵ Wasserstoff oder Methyl und der andere Hydroxysulfonyl bedeuten.

In der zweiten Stufe (B) des erfindungsgemäßen Verfahrens versetzt man die in Stufe (A) hergestellte Mischung mit Melamin und gewünschtenfalls mit weiterem Phenol, substituiertem Melaimin I und Formaldehyd oder Formaldehyd-liefernden Verbindungen, wobei man die Mengen so wählt, daß das Molverhältnis von Melaminen (Melamin und (a)) zu (b) im Bereich von 1:1,15 bis 1:4,5, vorzugsweise von 1:1,8 bis 1:3,0 liegt, daß das Pigment oder der Farbstoff in einer Menge im Bereich von 0,01 bis 5, vorzugsweise von 0,1 bis 2 Gew.-%, bezogen auf Melamin und (a) und (b), und daß das Phenol in einer Menge im Bereich von 0 bis 5, vorzugsweise von 0,2 bis 2 Mol-%, bezogen auf Melamin und (a) und (b) vorliegen.

Bei der Herstellung von Fasern ist es besonders bevorzugt, wenn man die Menge an substituiertem Melamin I (Komponente (a) im Bereich von 1 bis 50, vorzugsweise von 5 bis 15 und ganz besonders bevorzugt von 7 bis 12 Mol-%, bezogen auf die Summe von Melamin und substituiertem Melamin I, wählt und bevorzugt von 0,1 bis 9,5, besonders bevorzugt von 1 bis 5 Mol-%, bezogen auf Melamin und (a) und (b), eines der oben angeführten Phenole oder Mischungen derselben einsetzt.

Die gesamte Mischung wird dann in an sich bekannter Weise, wie es beispielsweise in EP-A 523 485, EP-A 355 760 oder Houben-Weyl, Bd.14/2, Georg Thieme Verlag, Stuttgart, 1963, S. 357 ff beschrieben wird, kondensiert.

Die Reaktionstemperaturen wählt man dabei im allgemeinen in einem Bereich von 20 bis 150, bevorzugt von 40 bis 140°C.

Der Reaktionsdruck ist in der Regel unkritisch. Man arbeitet im allgemeinen in einem Bereich von 100 bis 500 kPa, bevorzugt 100 bis 300 kPa.

Man kann die Reaktion mit oder ohne Lösungsmittel durchführen. In der Regel setzt man beim Einsatz von wäßriger Formaldehydlösung kein Lösungsmittel zu. Bei Verwendung von Formaldehyd gebunden in fester Form wählt man als Lösungsmittel üblicherweise Wasser, wobei die verwendete Menge in der Regel im Bereich von 5 bis 40, bevorzugt von 15 bis 25 Gew.-%, bezogen auf die Gesamtmenge an eingesetzten Monomeren, liegt.

Ferner führt man die Polykondensation im allgemeinen in einem pH-Bereich oberhalb von 7 aus. Bevorzugt ist der pH-Bereich von 7,5 bis 10,0, besonders bevorzugt von 8 bis 10.

Des weiteren kann man dem Reaktionsgemisch geringe Mengen üblicher Zusätze wie Alkalimetallsulfiten, z.B. Natriumdisulfit und Natriumsulfit, Alkalimetallformiaten, z.B. Natriumformiat, Alkalimetallcitrate, z.B. Natriumcitrat, Phosphate, Polyphosphate, Harnstoff, Dicyandiamid oder Cyanamid hinzufügen. Man kann sie als reine Einzelverbindungen oder als Mischungen untereinander jeweils in Substanz oder als wäßrige Lösungen vor, während oder nach der Kondensationsreaktion zusetzen.

Andere Modifizierungsmittel sind Amine sowie Aminoalkohole wie Diethylamin, Ethanolamin, Diethanolamin oder 2-Diethylaminoethanol.

Als weitere Zusatzstoffe kommen Füllstoffe, Emulgatoren oder Treibmittel in Betracht.

Als Füllstoffe kann man beispielsweise faser- oder pulverförmige anorganische Verstärkungsmittel oder Füllstoffe wie Glasfasern, Metallpulver, Metallsalze oder Silikate, z.B. Kaolin, Talkum, Schwerspat, Quarz oder Kreide einsetzen. Als Emulgatoren verwendet man in der Regel die üblichen nichtionogenen, anionenaktiven oder kationaktiven organischen Verbindungen mit langkettigen Alkylresten. Bei der Verarbeitung der nicht ausgehärteten Harze zu Schäumen kann man als Treibmittel beispielsweise Pentan einsetzen.

Die Polykondensation kann man diskontinuierlich oder kontinuierlich, beispielsweise in einem Extruder (s. EP-A 355 760), nach an sich bekannten Methoden durchführen.

Die Herstellung von Formkörpern durch Härtung der erfindungsgemäßen Kondensationsprodukte erfolgt in üblicher Weise durch Zusatz von geringen Mengen an Säuren wie Ameisensäure, Schwefelsäure oder Ammoniumchlorid.

Zur Herstellung von Fasern verspinnt man in der Regel das erfindungsgemäße Melamin-Harz in an sich bekannter Weise beispielsweise nach Zusatz eines Härters bei Raumtemperatur in einer Rotationsspinnapparatur und härtet anschließend die Rohfasern in einer erhitzten Atmosphäre aus, oder man verspinnt in einer erhitzten Atmosphäre, verdampft dabei gleichzeitig das als Lösungsmittel dienende Wasser und härtet das Kondensat aus. Ein solches Verfahren ist in der DE-A 23 64 091 eingehend beschrieben.

Zur Herstellung von Vliesen geht man in der Regel von watteförmigen Bahnen aus, indem man diese nach an sich bekannten Methoden nadelt. Die Herstellung von watteförmigen Bahnen nimmt man im allgemeinen nach üblichen Methoden beispielsweise auf einer Krempelanlage vor.

Die erfindungsgemäß gefärbten Fasern und Vliese setzt man bevorzugt zum Arbeits- und Brandschutz ein, beispielsweise zur Herstellung von sogenannten Blaumännern (Nachteil bislang: flammfestgeschützte Baumwolle verliert den Flammschutz nach mehrmaligem Waschen), Wandbespannungen (beispielsweise für öffentliche Gebäude, in denen die Flammfestigkeit im Vordergrund steht) sowie leichtere Bekleidung für die Feuerwehr.

In einer bevorzugten Ausführungsform stellt man schwarze Abdeckvliese und Abdeckgewebe für die Motorraumisolation her. Die Vorteile gegenüber entsprechenden Vliesen aus dem Stand der Technik liegen in der höheren Temperaturbeständigkeit (Dauertemperaturbeständigkeit ca. 200°C), der Flammfestigkeit sowie in der Tatsache, daß - im Vergleich zu anderen Fasern und Vliesen - keine Flammschutzausrüstung erforderlich ist.

Die Vorteile des erfindungsgemäßen Verfahrens liegen in dem Bereitstellen von homogen gefärbten Melamin-Formaldehyd-Kondensationsprodukten, die insbesondere beim Verspinnen zu Fasern keine Stippen bilden.

### Beispiel 1 (Kondensationsharz ohne Farbzusatz)

Eine Mischung aus 1871 g Melamin, 620 g einer 80 gew.-%igen Mischung aus 10 Mol-% Mono-, 50 Mol-% Bis- und 40 Mol-% Tris-Hydroxyoxapentylmelamin, 472,8 g Paraformaldehyd, 38,2 g Phenol und 15,4 ml Diethylethanolamin wurden innerhalb von 150 min bei 98°C bis zu einer Viskosität von 500 P·as kondensiert. Nach Zusatz von 1 Gew.-% Ameisensäure wurde das Harz nach bekannter Methode versponnen.

### Beispiel 2 (Batch-Kondensationsharz)

95 g Pigmentruß (RCC-Klasse) (DEGUSSA) wurden in einer Mischung von 1128,8 g 40 gew.-%igem Formaldehyd, 633 g einer 80 gew.-%igen Mischung aus 10 Mol-% Mono-, 50 Mol- Bis- und 40 Mol-% Tris-Hydroxyoxapentylmelamin mit einem Ultraturax 30 min fein dispergiert, anschließend erfolgte Zugabe von 1746,4 g Melamin, 472,8 g Paraformaldehyd, 38,2 g Phenol, 15,4 ml Diethylethanolamin und 185 g Wasser. Mit 25 gew.-%iger NaOH-Lösung wurde ein pH-Wert von 9,4 eingestellt. Es wurde bei 98°C bis zu einer Viskosität von 250 P·as kondensiert und anschließend sofort auf Raumtemperatur abgekühlt.
Feststoffgehalt (theor.): 77 %
Endviskosität: 430 Pa·s

Das schwarze Kondensationsharz wurde mit einem farblosen Kondensationsharz (siehe Beispiel 1) im Verhältnis 1:5 gemischt und in bekannter Weise versponnen.

### Beispiel 3

17,2 g Pigment Red 3 (C.I. 12120) wurden in einer Mischung von 733 g 40 gew.-%igem Formaldehyd, 411 g einer 80 gew.-%igen Mischung aus 10 Mol-% Mono-, 50 Mol-% Bis- und 40 Mol-% Tris-Hydroxyoxapentylmelamin mit einem Ultraturax 30 min fein dispergiert, anschließend erfolgte Zugabe von 1134 g Melamin, 307 g Paraformaldehyd, 24,8 g Phenol, 5,0 ml Diethylethanolamin und 107 g Wasser. Mit 25 gew.-%iger Na-OH-Lösung wurde ein pH-Wert von 8,9 eingestellt. Es wurde bei 98°C bis zu einer Viskosität von 250 Pa·s kondensiert und anschließend sofort auf Raumtemperatur abgekühlt.
Feststoffgehalt (theor.): 77 %
Endviskosität: 310 Pa·s

Das orange Kondensationsharz wurde in bekannter Weise versponnen.

### Beispiel 4

8,2 g Pigment Yellow 183 (C.I. 18792) wurden in einer Mischung von 733 g 40 gew.-%igem Formaldehyd, 411 g einer 80 gew.-%igen Mischung aus 10 Mol-% Mono-, 50 Mol-% Bis- und 40 Mol-% Tris-Hydroxyoxapentylmelamin mit einem Ultraturax 30 min fein dispergiert. Anschließend erfolgte Zugabe von 1134 g Melamin, 307 g Paraformaldehyd, 24,8 g Phenol, 5,0 ml Diethylethanolamin und 107 g Wasser. Mit 25 gew.-%iger Na-OH-Lösung wurde ein pH-Wert von 8,9 eingestellt. Es wurde bei 98°C bis zu einer Viskosität von 250 Pa·s kondensiert und anschließend sofort auf Raumtemperatur abgekühlt.
Feststoffgehalt (theor.): 77 %
Endviskosität: 510 Pa·s

Das gelbe Kondensationsharz wurde in bekannter Weise versponnen.

### Beispiel 5

8,2 g Pigment Blue (15:3) (C.I. 74160) wurden in einer Mischung von 733 g 40 gew.-%igem Formaldehyd, 411 g einer 80 gew.-%igen Mischung aus 10 Mol-% Mono-, 50 Mol-% Bis- und 40 Mol-% Tris-Hydroxyoxapentylmelamin mit einem Ultraturax 30 min fein dispergiert. Anschließend erfolgte Zugabe von 1134 g Melamin, 307 g Paraformaldehyd, 24,8 g Phenol, 5,0 ml Diethylethanolamin und 107 g Wasser. Mit 25 gew.-%iger Na-OH-Lösung wurde ein pH-Wert von 8,9 eingestellt. Es wurde bei 98°C bis zu einer Viskosität von 225 Pa·s kondensiert und anschließend sofort auf Raumtemperatur abgekühlt.
Feststoffgehalt (theor.): 77 %
Endviskosität: 495 Pa·s

Das blaue Kondensationsharz wurde in bekannter Weise versponnen.

### Beispiel 6 (ohne wäßrigen Formaldehyd, Master-Batch)

90 g Pigmentruß (RCC-Klasse, Fa. Degussa) wurden in einer Mischung aus 662 g einer 80 gew.-%igen Mischung aus 10 Mol-% Mono-, 50 Mol-% Bis- und 40 Mol-% Tris-Hydroxyoxapentylmelamin und 704 g Wasser mit einem Ultraturax 30 min fein dispergiert. Anschließend erfolgte Zugabe von 1814 g Melamin, 960 g Paraformaldehyd, 39,7 g Phenol, 8,0 ml Diethylethanolamin. Mit 25 gew.-%iger NaOH-Lösung wurde ein pH-Wert von 8,8 eingestellt. Es wurde bei 98°C bis zu einer Viskosität von 660 Pa·s kondensiert und anschließend sofort auf Raumtemperatur abgekühlt.
Feststoffgehalt (theor.): 77 %
Endviskosität: 690 Pa·s

Das schwarze Kondensationsharz wurde mit einem farblosen Kondensationsharz (siehe Beispiel 1) im Verhältnis 1:5 gemischt und in bekannter Weise versponnen.

### Beispiel 7

Farbloses Kondensationsharz aus Beispiel 1 wurde mit 2 Gew.-% einer Härtermischung (Mischung aus 35 gew.-%iger Ameisensäure, 2 Gew.-% einer 80 gew.-%igen Mischung aus 10 Mol-% Mono-, 50 Mol-% Bis- und 40 Mol-% Tris-Hydroxyoxapentylmelamin, 20 Gew.-% Pigmentruß (RCC-Klasse, Fa. Degussa) versetzt, intensiv gemischt und anschließend versponnen.

Die Viskositätsmessungen erfolgten mit einem Kegel-Platte-Viskosimeter (Fa. Epprecht Instruments & Controls), Meßkegel "Typ D", bei einer Temperatur von 20°C und einem Schergefälle von 20/sec.

Das Verspinnen der Fasern erfolgte nach dem in der DE-A 23 64 091 beschriebenen Verfahren.

### Beispiel 8

a) Zur Ermittlung der Temperaturbeständigkeit wurde gemäß DIN 53 857 ein Gewebe, hergestellt aus den Fasern aus Beispiel 2, bei verschiedenen Temperaturen getestet. Das Ergebnis findet sich in untenstehender Tabelle.
b) Zum Vergleich wurde analog zu (a) ein Gewebe aus präoxidiertem Polyacrylntril (SIGRAFIL® der Fa. Sigri) getestet. Das Ergebnis findet sich in untenstehender Tabelle.

**Tabelle -**

| Temperaturbeständigkeit | | | |
|---|---|---|---|
| Faserart | Verweilzeit | Temperatur | Reißfestigkeit (bez. auf Reißfestigkeit zu Beginn des Versuches) |
| schwarze Fasern aus Beispiel 2 | 6 h | 250°C | 110 % |
| schwarze Fasern aus Beispiel 2 | 1 h | 300°C | 110 % |
| SIGRAFIL® | 6 h | 250°C | 50 % |
| SIGRAFIL® | 1 h | 300°C | 0 % |

## Patentansprüche

1. Verfahren zur Herstellung gefärbter Melamin-Formaldehyd-Kondensationsprodukte durch Einmischen von Pigmenten oder Farbstoffen in eine Reaktionsmischung, enthaltend Ausgangsverbindungen zur Herstellung der Melamin-Formaldehyd-Kondensationsprodukte, dadurch gekennzeichnet, daß man (A) eine Mischung, enthaltend im wesentlichen
(a) ein substituiertes Melamin der Formel I 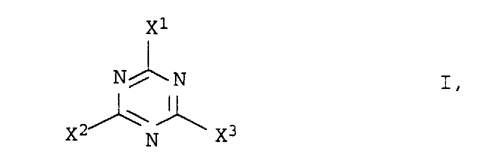 in der X¹, X² und X³ ausgewählt sind aus der Gruppe bestehend aus -NH₂, -NHR¹ und NR¹R², und X¹, X² und X³ nicht gleichzeitig -NH₂ sind, und R¹ und R² ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl, oder Mischungen von Melaminen I, und
(b) gewünschtenfalls Formaldehyd oder Formaldehyd-liefernden Verbindungen, wobei man das Molverhältnis von Formaldehyd zu Melaminen I im Bereich von 40:1 bis 0 wählt,
(c) ein Pigment oder einen Farbstoff und
(d) gewünschtenfalls ein unsubstituiertes Phenol oder mit Resten, ausgewählt aus der Gruppe, bestehend aus C₁-C₉-Alkyl und Hydroxy, substituierte Phenole, mit zwei oder drei Phenolgruppen substituierte C₁-C₄-Alkane, Di(hydroxyphenyl)sulfone oder Mischungen dieser Phenole,
wobei man das Pigment oder den Farbstoff in einer Menge im Bereich von 0,01 bis 30 Gew.-%, bezogen auf (a) und (b), und man das Phenol in einer Menge im Bereich von 0 bis 5 Mol-%, bezogen auf (a) und (b), zugibt,
durch intensives Rühren solange dispergiert, bis keine Pigmentagglomerate ≥ 1 µm mehr vorhanden sind,
und anschließend
(B) die in (A) hergestellte Mischung mit Melamin und gewünschtenfalls mit weiterem Phenol, substituiertem Melamin I und Formaldehyd oder Formaldehyd-liefernden Verbindungen versetzt, wobei man die Mengen so wählt, daß das Molverhältnis von Melaminen (Melamin und (a)) zu (b) im Bereich von 1:1,15 bis 1:4,5 liegt, daß das Pigment oder der Farbstoff in einer Menge im Bereich von 0,01 bis 5 Gew.-%, bezogen auf Melamin und (a) und (b), und daß das Phenol in einer Menge im Bereich von 0 bis 5 Mol-%, bezogen auf Melamin und (a) und (b) vorliegen, und anschließend in an sich bekannter Weise kondensiert.

2. Verfahren gemäß Anspruch 1, dadurch gekennzeichnet, daß man einen Farbstoff aus der Klasse der Azofarbstoffe, Anthrachinonfarbstoffe, Cumarinfarbstoffe oder Methion- oder Azamethinfarbstoffe einsetzt.

3. Gefärbte Melamin-Formaldehyd-Kondensationsprodukte, erhältlich nach dem Verfahren gemäß den Ansprüchen 1 bis 2.

4. Verwendung der gefärbten Melamin-Formaldehyd-Kondensationsprodukte gemäß Anspruch 3 zur Herstellung von farbigen Formkörpern, insbesondere Fasern und Vliese.

5. Gefärbte Formkörper, insbesondere Fasern und Vliese, erhältlich durch die Verwendung gemäß Anspruch 4.

6. Verwendung eines schwarzen Vlieses gemäß Anspruch 5 zur Herstellung von Abdeckvliesen und Abdeckgeweben als Motorraumisolation.

## Claims

1. A process for preparing colored melamine-formaldehyde condensation products by mixing pigments or dyes into a reaction mixture comprising starting compounds for preparing the melamine-formaldehyde condensation products, which comprises (A) dispersing a mixture essentially comprising
(a) a substituted melamine of the formula I 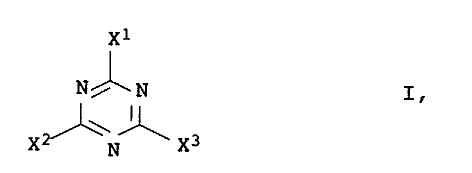 where X¹, X² and X³ are each selected from the group consisting of -NH₂, -NHR¹ and -NR¹R², and X¹, X2 and X3 are not all -NH₂, and R¹ and R² are each selected from the group consisting of hydroxy-C₂-C₁₀-alkyl, hydroxy-C₂-C₄-alkyl-(oxa-C₂-C₄-alkyl)ₙ, where n is from 1 to 5, and amino-C₂-C₁₂-alkyl, or mixtures of melamines I, and
(b) if desired, formaldehyde or formaldehyde-donating compounds in a molar ratio of formaldehyde to melamines I within the range from 40:1 to 0,
(c) a pigment or dye, and
(d) if desired, phenol, unsubstituted or substituted by radicals selected from the group consisting of C₁-C₉-alkyl and hydroxyl, C₁-C₄-alkanes substituted by 2 or 3 phenol groups, di(hydroxyphenyl) sulfones or mixtures thereof,
the pigment or dye being added in an amount within the range from 0.01 to 30% by weight, based on (a) and (b), and the phenol in an amount within the range from 0 to 5 mol%, based on (a) and (b),
by intensive stirring until there are no longer any pigment agglomerates ≥ 1 µm,
and then
(B) admixing the mixture prepared in (A) with melamine and if desired with further phenol, substituted melamine I and formaldehyde or formaldehyde-donating compounds, the amounts being chosen so that the molar ratio of melamines (melamine and (a)) to (b) is within the range from 1:1.15 to 1:4.5, the pigment or dye is present in an amount within the range from 0.01 to 5% by weight, based on melamine and (a) and (b), and the phenol is present in an amount within the range from 0 to 5 mol%, based on melamine and (a) and (b), and then condensing in a conventional manner.

2. A process as claimed in claim 1 wherein the dye used is selected from the class of the azo dyes, anthraquinone dyes, coumarin dyes or methine or azamethine dyes.

3. Colored melamine-formaldehyde condensation products obtainable by the process of claim 1 or 2.

4. The use of the colored melamine-formaldehyde condensation products of claim 3 for producing colored articles, in particular fibers and webs.

5. Colored articles, in particular fibers and webs, obtainable by the use of claim 4.

6. The use of a black web as claimed in claim 5 for manufacturing covering webs and fabrics as engine compartment insulation.

## Revendications

1. Procédé de préparation de produits de condensation de la mélamine et du formaldéhyde colorés par l'incorporation sous mélange de pigments ou de colorants à un mélange réactionnel, contenant des composés de départ pour la préparation des produits de condensation de la mélamine et du formaldéhyde, caractérisé en ce que (A), on disperse un mélange, qui contient essentiellement
(a) une mélamine substituée de la formule I ; 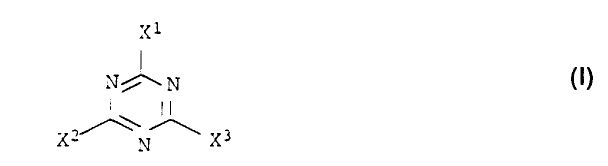 dans laquelle X¹, X² et X³ sont choisis dans le groupe formé par les radicaux -NH₂, -NHR¹ et NR¹R², et X¹, X² et X³ ne sont pas simultanément des radicaux -NH₂, et R¹ et R² sont choisis dans le groupe formé par les radicaux hydroxyalkyle en C₂ à C₁₀, hydroxyalkyl-(C₂-C₄)-(oxaalkyle en C₂ à C₄)ₙ, où n a une valeur qui varie de 1 à 5, et aminoalkyle en C₂ à C₁₂, ou des mélanges de mélamines 1, et
(b) éventuellement du formaldéhyde ou des composés engendrant du formaldéhyde, où le rapport molaire du formaldéhyde aux mélamines I est choisi dans la plage de 40:1 à 0,
(c) un pigment ou un colorant, et
(d) éventuellement un phénol non substitué ou des phénols substitués par des radicaux choisis dans le groupe constitué des radicaux alkyle en C₁ à C₉ et hydroxyle, des alcanes en C₁ à C₄ substitués par deux ou trois radicaux phénol, des di(hydroxyphényl)sulfones, ou des mélanges de ces phénols,
où on ajoute le pigment ou le colorant en une proportion qui varie dans la plage de 0,01 à 30% en poids, par rapport à (a) et (b), et on ajoute le phénol en une proportion qui fluctue de 0 à 5% molaires, par rapport à (a) et (b),
sous agitation intense et pendant la durée nécessaire pour que ne soient plus présents d'agglomérats du pigment ≥ 1 µm,
et, ensuite,
(B) on ajoute au mélange préparé en (A) de la mélamine et éventuellement du phénol supplémentaire, de la mélamine substituée I et du formaldéhyde ou des composés engendrant du formaldéhyde, où l'on choisit les proportions en une manière telle que le rapport molaire des mélamines (mélamine et (a)) à (b) se situe dans la plage de 1:1,15 à 1:4,5, que le pigment ou le colorant soient présents en une proportion qui varie de 0,01 à 5% en poids, par rapport à la mélamine et (a) et (b), et que le phénol soit présent en une proportion qui varie dans la plage de 0 à 5% molaires, par rapport à la mélamine et (a) et (b), et on procède ensuite à la condensation d'une manière en soi connue.

2. Procédé suivant la revendication 1, caractérisé en ce que l'on utilise un colorant appartenant à la classe des colorants azoïques, des colorants anthraquinoniques, des colorants coumariniques, ou des colorants méthioniques ou azaméthiniques.

3. Produit de condensation de la mélamine et du formaldéhyde colorés, que l'on peut obtenir par la mise en oeuvre du procédé suivant l'une quelconque des revendications 1 et 2.

4. Utilisation des produits de condensation de la mélamine et du formaldéhyde colorés, suivant la revendication 3, pour la fabrication d'articles moulés colorés, en particulier, de nappes et de fibres.

5. Articles moulés colorés, plus particulièrement, fibres et nappes, que l'on peut obtenir par l'utilisation suivant la revendication 4.

6. Utilisation d'une nappe noire suivant la revendication 5, pour la fabrication de nappes de recouvrement et de tissus de recouvrement et comme produits d'isolation pour les espaces moteurs.
